(19) Europäisches Patentamt
European Patent Office
Office européen des brevets

(11) **EP 1 959 675 A2**

(12) **EUROPEAN PATENT APPLICATION**

(43) Date of publication:
**20.08.2008 Bulletin 2008/34**

(51) Int Cl.:
*H04N 5/225* (2006.01)     *B60R 1/00* (2006.01)
*G06T 7/20* (2006.01)     *H04N 5/14* (2006.01)

(21) Application number: **08151193.3**

(22) Date of filing: **08.02.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **16.02.2007 JP 2007036759**

(71) Applicant: **Omron Corporation**
**Kyoto-shi, Kyoto 600-8530 (JP)**

(72) Inventor: **Koitabashi, Hiroyoshi**
**Kyoto 600-8530 (JP)**

(74) Representative: **Brochard, Pascale et al**
**Osha Liang**
**121 Avenue des Champs Élysées**
**75008 Paris (FR)**

(54) **Detection device, method and program thereof**

(57)     A rotational movement component of a camera provided on a mobile object is to be detected in a precise and simple manner. Three motion vectors extracted from the forward images captured by a camera mounted on a vehicle are extracted on a randombasis. A temporary rotation angle is calculated using the extracted motion vectors based on a relational expression that represents the relationship between a background vector and the rotation angle of the camera, the relational expression being a linear expression of the yaw angle, pitch angle, and roll angle of the rotational movement of the camera. An error when using the temporary rotation angle is calculated for other motion vectors, and the number of motion vectors for which the error is within a predetermined threshold value is counted. After repeating such a process for a predetermined number of times, the temporary rotation angle with the largest number of motion vectors for which the error is within the predetermined threshold value is selected as the rotation angle of the camera. The present invention can be applied to an in-vehicle obstacle detecting device.

*FIG. 2*

**Description**

BACKGROUND OF THE INVENTION

1. Field of the Invention

The present invention relates to a detection device, method and program thereof, and more particularly to a detection device, method and program thereof, for detecting a rotational movement component of a camera mounted on a mobile object.

2. Description of Related Art

In the past, various methods have been proposed for calculating an optical flow that represents the motion of objects within a moving picture as a motion vector (see Kensuke TAIRA, Masaaki SHIBATA "Novel Method for Generating Optical Flow based on Fusing Visual Information and Camera Motion," Journal of the Faculty of Science and Technology Seikei University, Vol. 43, No. 2, Pages 87-93, December 2006 (Non-Patent Document 1), for example).

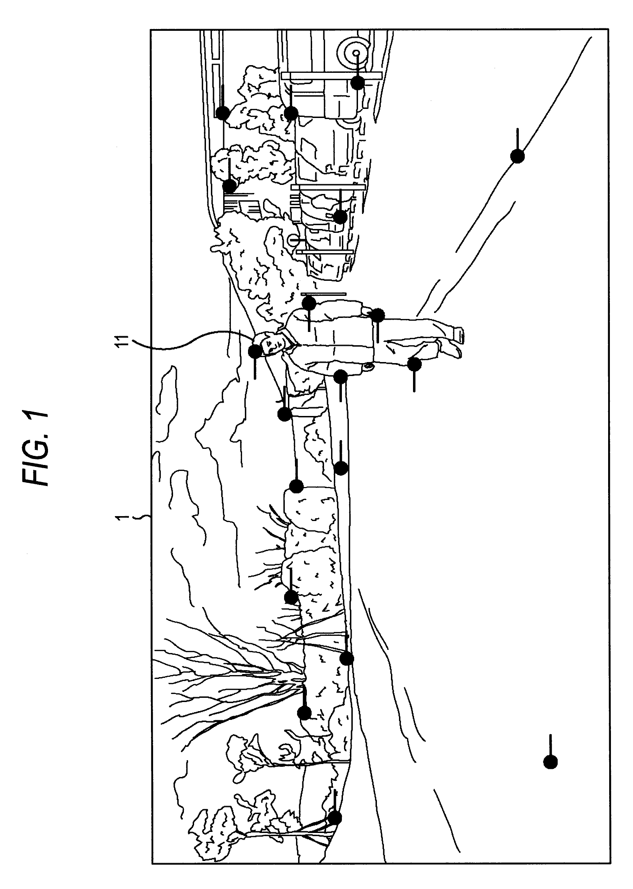

On the other hand, in the technique of detecting moving objects present in the surroundings of a vehicle such as preceding vehicles, opposing vehicles, or obstacles, a technique of detecting such an optical flow is employed. For example, as shown in Fig. 1, an optical flow as represented by a motion vector that is represented by lines starting from black circles is detected from an image 1 captured in the forward area of a vehicle. Based on the direction or magnitude of the detected optical flow, a person 11 as a moving object within the image 1 is detected.

For more precise detection of the moving object based on the optical flow, there has been proposed one in which a movement direction of a driver's vehicle is estimated based on the detection signals from a vehicle speed sensor and a yaw rate sensor, and in which a moving object is detected based on an optical flow corrected based on the estimated movement direction (see JP-A-6-282655 (Patent Document 1), for example).

There has also been proposed one in which considering an amount corresponding to a movement amount of a point at infinity in an image as a component generated by the turning of a vehicle, an optical flow is corrected by excluding the amount corresponding to the movement amount of a point at infinity from the optical flow, and in which a relative relationship between a driver's vehicle and following other vehicles is monitored based on the corrected optical flow (see JP-A-2000-251199 (Patent Document 2), for example).

However, it cannot be said that the detection precision of detecting a rotational movement component of a vehicle by the conventional yaw rate sensor is sufficient. As a result, there is a fear of deteriorating the detection precision of a moving object.

In addition, in the case of correcting the optical flow based on a movement amount of a point of infinity, for example, if it is not possible to detect a point of infinity for reasons such as the absence of parallel lines in the image, it becomes impossible to detect the component generated by the turning of the vehicle and to thus correct the optical flow.

SUMMARY OF THE INVENTION

The present invention has been made in view of such circumstances, and its object is to detect a rotational movement component of a camera mounted on a mobile object in a precise and simple manner.

According to one aspect of the present invention, there is provided a detection device that detects a rotational movement component of a camera mounted on a mobile object performing a translational movement in only one axis direction, the detection device including: a detecting means for detecting the rotational movement component of the camera using a motion vector of a stationary object within an image captured by the camera and a relational expression that represents the relationship between the motion vector and the rotational movement component of the camera, based on a motion vector at feature points extracted within the image, the relational expression derived by expressing two-axis directional components among three-axis directional components of a translational movement of the camera using a remaining one-axis directional component.

In the detection device according to the above aspect of the present invention, a rotational movement component of a camera mounted on a mobile object performing a translational movement in only one axis direction is detected. The rotational movement component of the camera is detected using a motion vector of a stationary object within an image captured by the camera and a relational expression that represents the relationship between the motion vector and the rotational movement component of the camera, based on a motion vector at feature points extracted within the image, the relational expression derived by expressing two-axis directional components among three-axis directional components of a translational movement of the camera using a remaining one-axis directional component.

Therefore, it is possible to detect the rotational movement component of a camera mounted on a mobile object in a precise and simple manner.

The detecting means can be configured by a CPU (Central Processing Unit), for example.

The relational expression may be expressed by a linear expression of a yaw angle, a pitch angle, and a roll angle of the rotational movement of the camera.

With this, it is possible to calculate the rotational movement component of the camera through a simple calculation.

When the focal length of the camera is F, the x- and y-axis directional coordinates of the feature points are Xp and Yp, respectively, the x- and y-axis directional components of the motion vector at the feature points are $v_x$ and $v_y$, respectively, the pitch angle, yaw angle, and roll angle of the rotational movement of the camera are $\theta$, $\psi$, and $\varphi$, respectively, the focal length of the camera is F, the translational movement component in the z-axis direction of the camera is $t_z$, and the translational movement components in the x- and y-axis direction of the camera are $t_x = at_z$ (a: constant) and $t_y = bt_z$ (b: constant), respectively, the detecting means may detect the rotational movement component of the camera using the following relational expression.

$$(Yp-Fb)\left\{v_x-\left[-F\psi+Yp\phi-\frac{Xp^2}{F}\psi+\frac{XpYp}{F}\theta\right]\right\}$$

$$= (Xp-Fa)\left\{v_y-\left[-Xp\phi+F\theta-\frac{XpYp}{F}\psi+\frac{Yp^2}{F}\theta\right]\right\}$$

With this, it is possible to calculate the rotational movement component of the camera through a simple calculation.

When the direction of the mobile object performing the translational movement is substantially parallel or perpendicular to the optical axis of the camera, the detecting means may detect the rotational movement component of the camera using a simplified expression of the relational expression by applying a model in which the direction of the translational movement of the camera is restricted to the direction of the mobile object performing the translational movement.

With this, it is possible to calculate the rotational movement component of the camera through a simpler calculation.

The mobile object may be a vehicle, the camera may be mounted on the vehicle so that the optical axis of the camera is substantially parallel to the front-to-rear direction of the vehicle, and the detecting means may detect the rotational movement component of the camera using the simplified expression of the relational expression by applying the model in which the direction of the translational movement of the camera is restricted to the front-to-rear direction of the vehicle.

With this, it is possible to detect the rotational movement component of the camera accompanied by the rotational movement of the vehicle in a precise and simple manner.

The detecting means may detect the rotational movement component of the camera based on the motion vector at the feature point on the stationary object among the feature points.

With this, it is possible to detect the rotational movement component of the camera in a more precise manner.

The detecting means may perform a robust estimation so as to suppress the effect on the detection results of the motion vector at the feature point on a moving object among the feature points.

With this, it is possible to detect the rotational movement component of the camera in a more precise manner.

According to another aspect of the present invention, there is provided a detection method of a detection device for detecting a rotational movement component of a camera mounted on a mobile object performing a translational movement in only one axis direction, or a program for causing a computer to execute a detection process for detecting a rotational movement component of a camera mounted on a mobile object performing a translational movement in only one axis direction, the detection method or detection process including: a detecting step of detecting the rotational movement component of the camera using a motion vector of a stationary object within an image captured by the camera and a relational expression that represents the relationship between the motion vector and the rotational movement component of the camera, based on a motion vector at feature points extracted within the image, the relational expression derived by expressing two-axis directional components among three-axis directional components of a translational movement of the camera using a remaining one-axis directional component.

In the detection method or program according to the above aspect of the present invention, a rotational movement component of a camera mounted on a mobile object performing a translational movement in only one axis direction is detected. The rotational movement component of the camera is detected using a motion vector of a stationary object within an image captured by the camera and a relational expression that represents the relationship between the motion vector and the rotational movement component of the camera, based on a motion vector at feature points extracted within the image, the relational expression derived by expressing two-axis directional components among three-axis directional components of a translational movement of the camera using a remaining one-axis directional component.

Therefore, it is possible to detect the rotational movement component of a camera mounted on a mobile object in a precise and simple manner.

The detection step is configured by a detection step executed, for example, by a CPU, in which the rotational movement component of the camera is detected using a motion vector of a stationary object within an image captured by the camera and a relational expression that represents the relationship between the motion vector and the rotational movement component of the camera, based on a motion vector at feature points extracted within the image, the relational expression derived by expressing two-axis directional components among three-axis directional components of a translational movement of the camera using a remaining one-axis directional component.

According to the aspects of the present invention, it is possible to detect a rotational movement component of a camera mounted on a mobile object. In particular, according to the aspects of the present invention, it is possible to detect the rotational movement component of the camera mounted on a mobile object in a precise and simple manner.

BRIEF DESCRIPTION OF DRAWINGS

Fig. 1 is a diagram showing an example of detecting a mobile object based on an optical flow.
Fig. 2 is a block diagram showing one embodiment of an obstacle detection system to which the present invention is applied.
Fig. 3 is a diagram showing an example of detection results of a laser radar.
Fig. 4 is a diagram showing an example of forward images.
Fig. 5 is a block diagram showing a detailed functional construction of a rotation angle detecting portion shown in Fig. 2.
Fig. 6 is a block diagram showing a detailed functional construction of a clustering portion shown in Fig. 2.
Fig. 7 is a flowchart for explaining an obstacle detection process executed by the obstacle detection system.
Fig. 8 is a flowchart for explaining the details of an ROI setting process of step S4 in Fig. 7.
Fig. 9 is a diagram showing an example of a detection region.
Fig. 10 is a diagram for explaining the types of objects that are extracted as a process subject.
Fig. 11 is a diagram for explaining an exemplary ROI setting method.
Fig. 12 is a diagram showing an example of the forward image and the ROI.
Fig. 13 is a flowchart for explaining the details of a feature point extraction process of step S6 in Fig. 7.
Fig. 14 is a diagram showing an example of the feature amount of each pixel within an ROI.
Fig. 15 is a diagram for explaining sorting of feature point candidates.
Fig. 16 is a diagram for explaining a specific example of the feature point extraction process.
Fig. 17 is a diagram for explaining a specific example of the feature point extraction process.
Fig. 18 is a diagram for explaining a specific example of the feature point extraction process.
Fig. 19 is a diagram for explaining a specific example of the feature point extraction process.
Fig. 20 is a diagram showing an example of the feature points extracted based only on a feature amount.
Fig. 21 is a diagram showing an example of the feature points extracted by the feature point extraction process of Fig. 13.
Fig. 22 is a diagram showing an example of the feature points extracted from the forward images shown in Fig. 12.
Fig. 23 is a diagram showing an example of a motion vector detected from the forward images shown in Fig. 12.
Fig. 24 is a diagram for explaining the details of the rotation angle detection process of step S8 in Fig. 7.
Fig. 25 is a diagram for explaining the details of the clustering process of step S9 in Fig. 7.
Fig. 26 is a diagram for explaining a method of detecting the types of motion vectors.
Fig. 27 is a diagram showing an example of the detection results for the forward images shown in Fig. 12.
Fig. 28 is a block diagram showing a detailed functional construction of a second embodiment of the rotation angle detecting portion shown in Fig. 2.
Fig. 29 is a diagram for explaining the details of a rotation angle detection process of step S8 in Fig. 7 by the rotation angle detecting portion shown in Fig. 28.
Fig. 30 is a block diagram showing a detailed functional construction of a third embodiment of the rotation angle detecting portion shown in Fig. 2.
Fig. 31 is a diagram for explaining the details of a rotation angle detection process of step S8 in Fig. 7 by the rotation angle detecting portion shown in Fig. 30.
Fig. 32 is a diagram showing an example of the attaching direction of the camera.

Fig. 33 is a block diagram showing an exemplary construction of a computer.

DESCRIPTION OF PREFERRED EMBODIMENTS

Hereinafter, an embodiment of the present invention will be described with reference to the accompanying drawings.

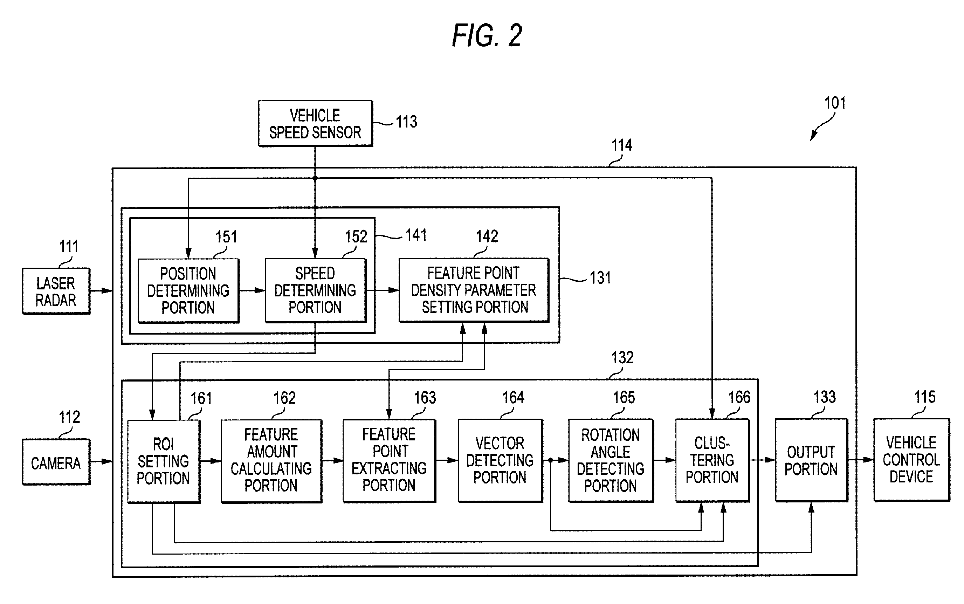

Fig. 2 is a block diagram showing one embodiment of an obstacle detection system to which the present invention is applied. The obstacle detection system 101 shown in Fig. 2 is provided on a vehicle, for example, and is configured to detect persons (for example, pedestrians, stationary persons, etc.) in the forward area of the vehicle (hereinafter also referred to as a driver's vehicle) on which the obstacle detection system 101 is mounted and to control the operation of the driver's vehicle according to the detection results.

The obstacle detection system 101 is configured to include a laser radar 111, a camera 112, a vehicle speed sensor 113, an obstacle detecting device 114, and a vehicle control device 115.

The laser radar 111 is configured by a one-dimensional scan-type laser radar, for example, that scans in a horizontal direction. The laser radar 111 is mounted substantially parallel to the bottom surface of the driver's vehicle to be directed toward the forward area of the driver's vehicle, and is configured to detect an object (for example, vehicles, persons, obstacles, architectural structures, road-side structures, road traffic signs and signals, etc.) in the forward area of the driver's vehicle, the object having a reflection light intensity equal to or greater than a predetermined threshold value, and the reflection light being reflected from the object after a beam (laser light) is emitted from the laser radar 111 . The laser radar 111 supplies object information to the obstacle detecting device 114, the information including an x- and z-axis directional position (X, Z) of the object detected at predetermined intervals in a radar coordinate system and a relative speed (dX, dZ) in the x- and z-axis directions of the object relative to the driver's vehicle. The object information supplied from the laser radar 111 is temporarily stored in a memory (not shown) or the like of the obstacle detecting device 114 so that portions of the obstacle detecting device 114 can use the object information.

In the radar coordinate system, a beam emitting port of the laser radar 111 corresponds to a point of origin; a distance direction (front-to-back direction) of the driver's vehicle corresponds to the z-axis direction; the height direction perpendicular to the z-axis direction corresponds to the y-axis direction; and the transversal direction (left-to-right direction) of the driver' s vehicle perpendicular to the z- and y-axis directions corresponds to the x-axis direction. In addition, the right direction of the radar coordinate system is a positive direction of the x axis; the upward direction thereof is a positive direction of the y axis; and the forward direction thereof is a positive direction of the z axis.

The x-axis directional position X of the object is calculated by a scan angle of the beam at the time of receiving the reflection light from the object, and the z-axis directional position Z of the object is calculated by a delay time until the reflection light from the object is received after the beam is emitted. The relative speed (dX (t), dZ(t)) of the object at a time point t is calculated by the following expressions (1) and (2).

$$dX(t) = \frac{1}{N} \sum_{k=0}^{N-1} \{X(t-k) - X(t-k-1)\} \qquad \cdot \cdot \cdot (1)$$

$$dZ(t) = \frac{1}{N} \sum_{k=0}^{N-1} \{Z(t-k) - Z(t-k-1)\} \qquad \cdot \cdot \cdot (2)$$

In the expressions (1) and (2), N represents the number of object tracking operations made; and X(t-k) and Z(t-k) represent the x- and z-axis directional positions of the object calculated k times before, respectively. That is, the relative speed of the object is calculated based on the amount of displacement of the position of the object.

The camera 112 is configured by a camera, for example, using a CCD image sensor, a CMOS image sensor, a logarithmic transformation-type image sensor, etc. The camera 112 is mounted substantially parallel to the bottom surface of the driver' s vehicle to be directed toward the forward area of the driver's vehicle so that the optical axis of the camera 112 is substantially parallel to the direction of the translational movement of the driver's vehicle; that is, parallel to the front-to-back direction of the driver's vehicle. The camera 112 is fixed so as not to be substantially translated or rotated with respect to the driver's vehicle. The central axis (an optical axis) of the laser radar 111 and the camera 112 is preferably substantially parallel to each other.

The camera 112 is configured to output an image (hereinafter, referred to as a forward image) captured in the forward area of the driver' s vehicle at predetermined intervals to the obstacle detecting device 114. The forward image supplied from the camera 112 is temporarily stored in a memory (not shown) or the like of the obstacle detecting device 114 so that portions of the obstacle detecting device 114 can use the forward image.

In the following, the camera coordinate system is constructed such that the center of the lenses of the camera 112 corresponds to a point of origin; the direction of the central axis (optical axis) of the camera 112, that is, the distance direction (the front-to-back direction) of the driver's vehicle corresponds to the z-axis direction; the height direction perpendicular to the z-axis direction corresponds to the y-axis direction; and the direction perpendicular to the z- and y-axis directions, that is, the transversal direction (the left-to-right direction) of the driver's vehicle corresponds to the x-axis direction. In the camera coordinate system, the right direction corresponds to the positive direction of the x-axis direction; the upward direction corresponds to the positive direction of the y-axis direction; and the front direction corresponds to the positive direction of the z-axis direction.

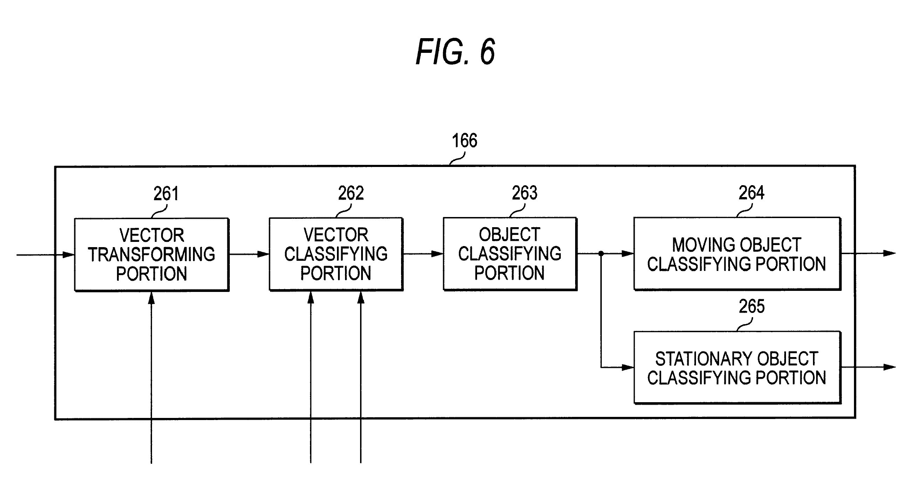

The vehicle speed sensor 113 detects the speed of the driver's vehicle and supplies a signal representing the detected vehicle speed to portions of the obstacle detecting device 114, the portions including a position determining portion 151, a speed determining portion 152, and a vector classifying portion 262 (Fig. 6) of a clustering portion 166. Incidentally, the vehicle speed sensor 113 may be configured, for example, by a vehicle speed sensor that is provided on the driver's vehicle, or may be configured by a separate sensor.

The obstacle detecting device 114 is configured, for example, by a CPU (Central Processing Unit), ROM (Read Only Memory), RAM (Random Access Memory), etc., and is configured to detect persons present in the forward area of the driver's vehicle and to supply information representing the detection results to the vehicle control device 115.

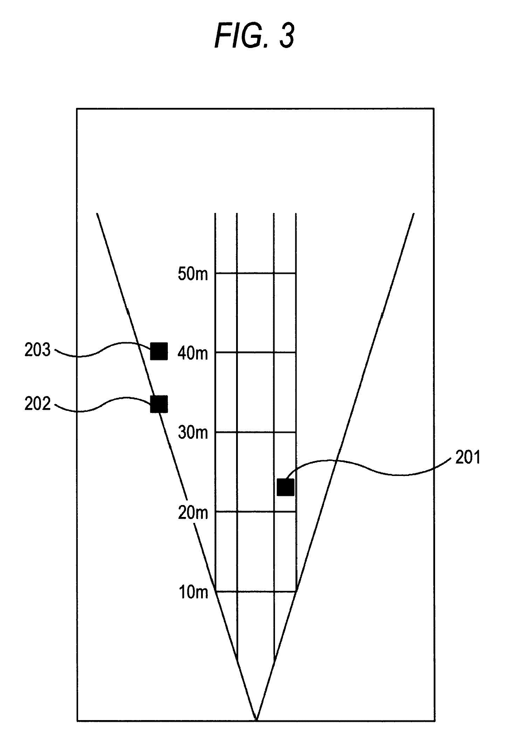

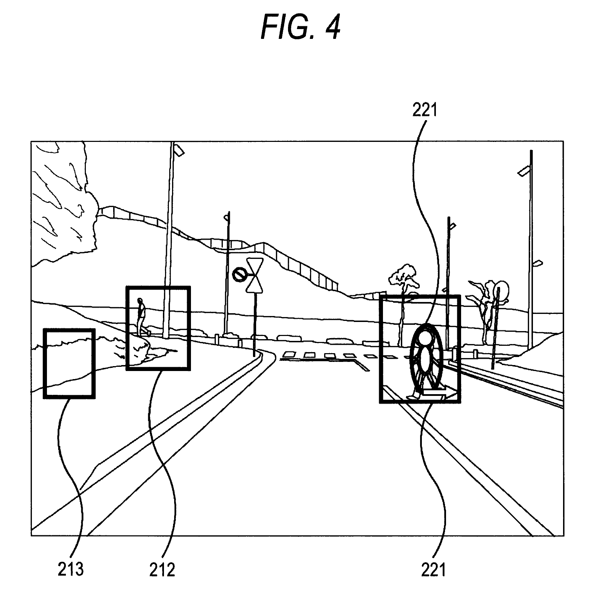

Next, referring to Figs. 3 and 4, an outline of the process executed by the obstacle detecting device 114 will be described. Fig. 3 is a bird's-eye view showing an example of the detection results of the laser radar 111. In the drawing, the distance represents a distance from the driver's vehicle; and among four vertical lines, the inner two lines represent a vehicle width of the driver's vehicle and the outer two lines represent a lane width of the lanes along which the driver's vehicle travels. In the example of Fig. 3, an object 201 is detected within the lanes on the right side of the driver's vehicle and at a distance greater than 20 meters from the driver's vehicle, and additionally, other objects 202 and 203 are detected off the lanes on the left side of the driver's vehicle and respectively at a distance greater than 30 meters and at a distance of 40 meters, from the driver's vehicle.

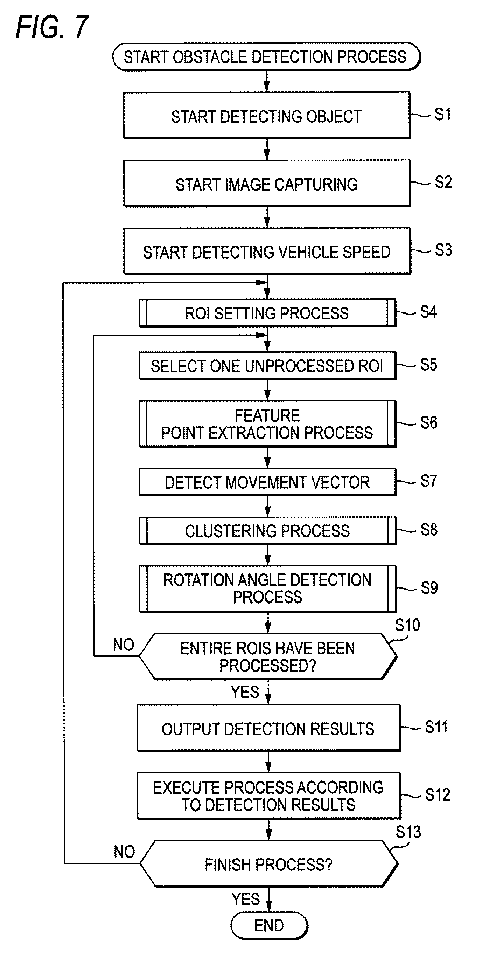

Fig. 4 shows an example of the forward image captured by the camera 112 at the same time point as when the detection of Fig. 3 was made. As will be described with reference to Fig. 7 or the like, in the forward image shown in Fig. 4, the obstacle detecting device 114 sets a region 211 corresponding to the object 201, a region 212 corresponding to the object 202, and a region 213 corresponding to the object 203, as ROIs (Region Of Interest; interest region) and performs image processing to the set ROIs, thereby detecting persons in the forward area of the driver's vehicle. In the case of the example shown in Fig. 4, the position, movement direction, speed, or the like of the person present within an area 221 of the ROI 211 is output as the detection results from the obstacle detecting device 114 to the vehicle control device 115.

As will be described with reference to Fig. 7 or the like, the obstacle detecting device 114 is configured to extract objects to be subjected to the process based on the position and speed of the object and to perform the image processing only to the extracted objects, rather than processing the entire objects detected by the laser radar 111.

Referring to Fig. 2, the obstacle detecting device 114 is configured to further include an object information processing portion 131, an image processing portion 132, and an output portion 133.

The object information processing portion 131 is a block that processes the object information supplied from the laser radar 111, and is configured to include an object extracting portion 141 and a feature point density parameter setting portion 142.

The object extracting portion 141 is a block that extracts objects to be processed by the image processing portion 132 from the objects detected by the laser radar 111, and is configured to include the position determining portion 151 and the speed determining portion 152.

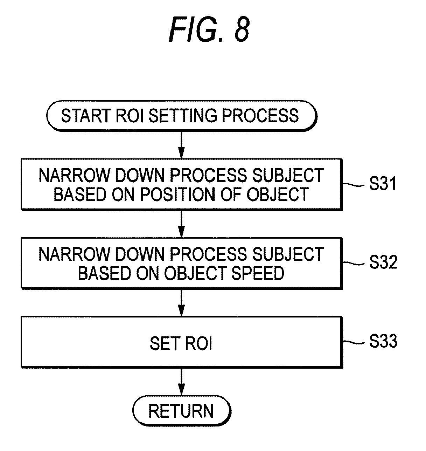

As will be described with reference to Fig. 8 or the like, the position determining portion 151 sets a detection region based on the speed of the driver's vehicle detected by the vehicle speed sensor 113 and extracts objects present within the detection region from the objects detected by the laser radar 111, thereby narrowing down the object to be processed by the image processing portion 132. The position determining portion 151 supplies information representing the object extraction results to the speed determining portion 152.

As will be described with reference to Fig. 8 or the like, the speed determining portion 152 narrows down the object to be subjected to the process of the image processing portion 132 by extracting the objects of which the speed satisfies a predetermined condition from the objects extracted by the position determining portion 151. The speed determining portion 152 supplies information representing the object extraction results and the object information corresponding to the extracted objects to the ROI setting portion 161. The speed determining portion 152 also supplies the object extraction results to the feature point density parameter setting portion 142.

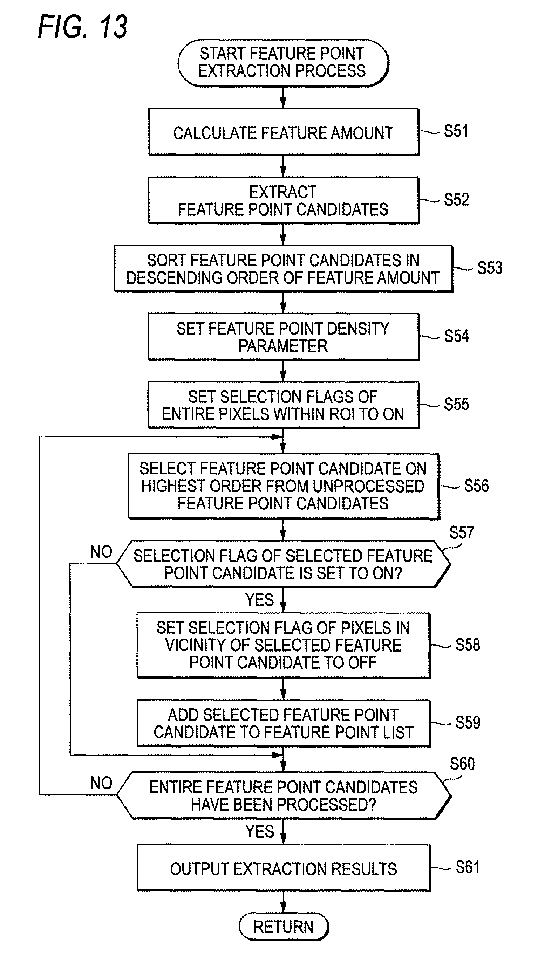

As will be described with reference to Fig. 13 or the like, the feature point density parameter setting portion 142 sets a feature point density parameter for each of the ROIs set by the ROI setting portion 161 based on the distance of the object within the ROIs from the driver's vehicle, the parameter representing a density of a feature point extracted within the ROIs. The feature point density parameter setting portion 142 supplies information representing the set feature point density parameter to the feature point extracting portion 163.

The image processing portion 132 is a block that processes the forward image captured by the camera 112, and is configured to include the ROI setting portion 161, a feature amount calculating portion 162, the feature point extracting portion 163, a vector detecting portion 164, a rotation angle detecting portion 165, and a clustering portion 166.

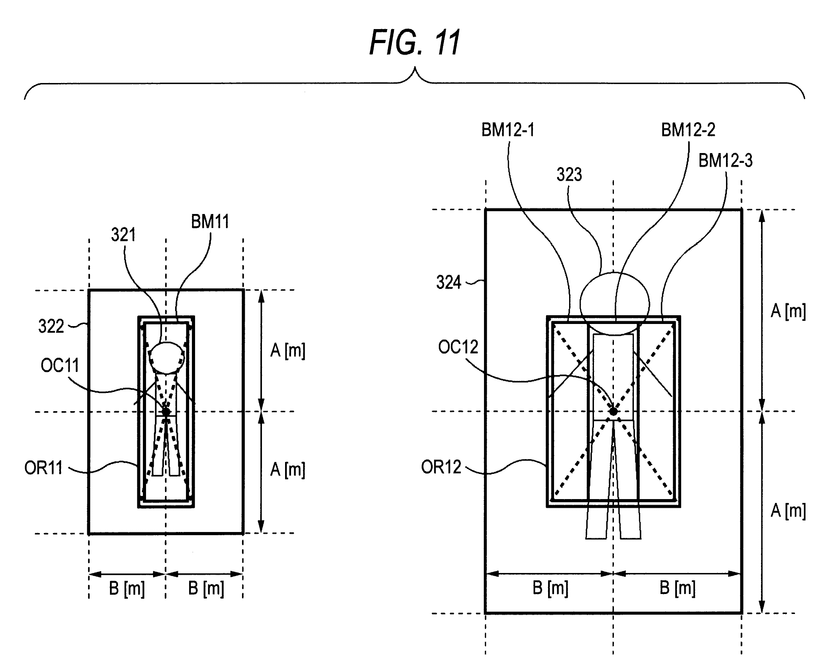

As will be described with reference to Fig. 11 or the like, the ROI setting portion 161 sets ROIs for each object extracted by the object extracting portion 141. The ROI setting portion 161 supplies information representing the position of each ROI in the forward image to the feature amount calculating portion 162. The ROI setting portion 161 also supplies information representing the distance of the object within each ROI from the driver's vehicle to the vector classifying portion 262 (Fig. 6) of the clustering portion 166. The ROI setting portion 161 also supplies information representing the position of each ROI in the forward image and in the radar coordinate system to the feature point density parameter setting portion 142. The ROI setting portion 161 also supplies the information representing the position of each ROI in the forward image and in the radar coordinate system and the object information corresponding to the object within each ROI to the output portion 133.

As will be described with reference to Fig. 13 or the like, the feature amount calculating portion 162 calculates a predetermined type of feature amount of the pixels within each ROI. The feature amount calculating portion 162 supplies information representing the position of the processed ROIs in the forward image and the feature amount of the pixels within each ROI to the feature point extracting portion 163.

The feature point extracting portion 163 supplies information representing the position of the ROIs in the forward image, from which the feature point is to be extracted, to the feature point density parameter setting portion 142. As will be described with reference to Fig. 13 or the like, the feature point extracting portion 163 extracts the feature point of each ROI based on the feature amount of the pixels and the feature point density parameter. The feature point extracting portion 163 supplies the information representing the position of the processed ROIs in the forward image and the information representing the position of the extracted feature point to the vector detecting portion 164.

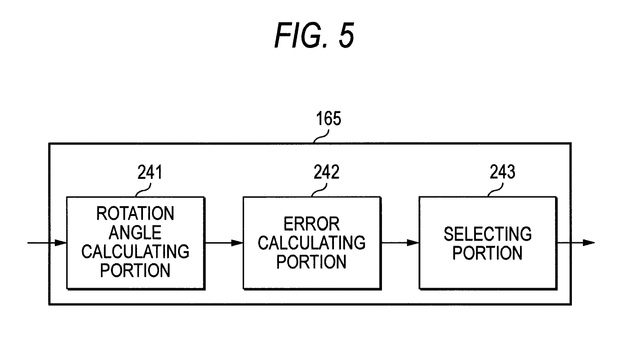

As will be described with reference to Fig. 13 or the like, the vector detecting portion 164 detects a motion vector at the feature points extracted by the feature point extracting portion 163. The vector detecting portion 164 supplies information representing the detected motion vector to a rotation angle calculating portion 241 (Fig. 5) of the rotation angle detecting portion 165. The vector detecting portion 164 also supplies information representing the detected motion vector and the position of the processed ROIs in the forward image to the vector transforming portion 261 (Fig. 6) of the clustering portion 166.

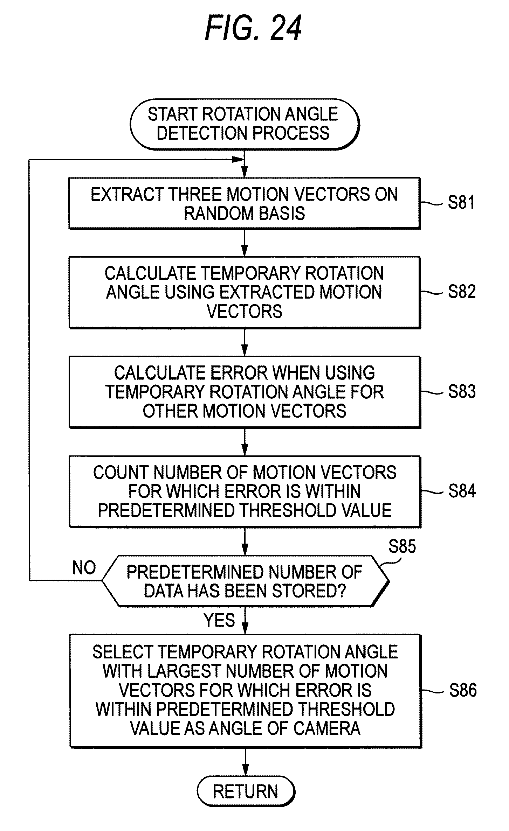

As will be described with reference to Fig. 24, the rotation angle detecting portion 165 detects the component of the rotational movement of the camera 112 accompanied by the rotational movement of the driver's vehicle, that is, the direction and magnitude of the rotation angle of the camera 112 by the use of a RANSAC (Random Sample Consensus) technique, one of the robust estimation techniques, and supplies information representing the detected rotation angle to the vector transforming portion 261 (Fig. 6) of the clustering portion 166.

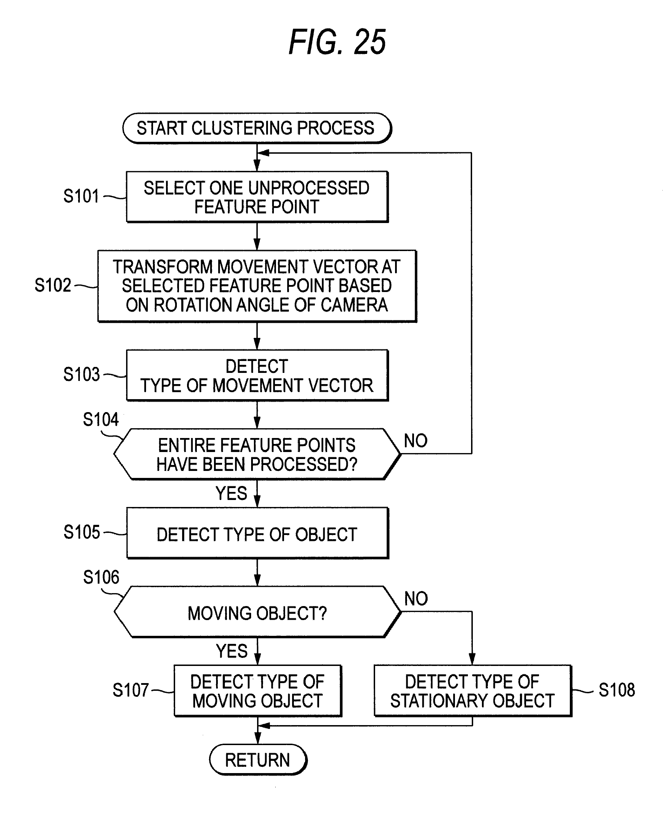

As will be described with reference to Fig. 25 or the like, the clustering portion 166 classifies the type of the objects within each ROI. The clustering portion 166 supplies information representing the classification results to the output portion 133.

The output portion 133 supplies information representing the detection results including the type, position, movement direction, and speed of the detected objects to the vehicle control device 115.

The vehicle control device 115 is configured, for example, by an ECU (Electronic Control Unit), and is configured to control the operation of the driver's vehicle and various in-vehicle devices provided on the driver's vehicle based on the detection results of the obstacle detecting device 114.

Fig. 5 is a block diagram showing a detailed functional construction of the rotation angle detecting portion 165. The rotation angle detecting portion 165 is configured to include a rotation angle calculating portion 241, an error calculating portion 242, and a selecting portion 243.

As will be described with reference to Fig. 24, the rotation angle calculating portion 241 extracts three motion vectors from the motion vectors detected by the vector detecting portion 164 on a random basis and calculates a temporary rotation angle of the camera 112 based on the extracted motion vectors. The rotation angle calculating portion 241 supplies information representing the calculated temporary rotation angles to the error calculating portion 242.

As will be described with reference to Fig. 24, the error calculating portion 242 calculates an error when using the temporary rotation angle for each of the remaining motion vectors other than the motion vectors used for calculation of the temporary rotation angle. The error calculating portion 242 supplies information correlating the motion vectors and the calculated errors with each other and information representing the temporary rotation angles to the selecting portion 243.

As will be described with reference to Fig. 24, the selecting portion 243 selects one of the temporary rotation angles calculated by the rotation angle calculating portion 241, based on the number of motion vectors for which the error is within a predetermined threshold value, and supplies information representing the selected rotation angle to the vector transforming portion 261 (Fig. 6) of the clustering portion 166.

Fig. 6 is a block diagram showing a detailed functional construction of the clustering portion 166. The clustering portion 166 is configured to include the vector transforming portion 261, the vector classifying portion 262, an object classifying portion 263, a moving object classifying portion 264, and a stationary object classifying portion 265.

As will be described with reference to Fig. 25, the vector transforming portion 261 calculates a motion vector (hereinafter also referred to as a transformation vector) based on the rotation angle of the camera 112 detected by the rotation angle detecting portion 165 by subtracting a component generated by the rotational movement of the camera 112 accompanied by the rotational movement of the driver' s vehicle from the components of the motion vector detected by the vector detecting portion 164. The vector transforming portion 261 supplies information representing the calculated transformation vector and the position of the processed ROIs in the forward image to the vector classifying portion 262.

As will be described with reference to Fig. 25 or the like, the vector classifying portion 262 detects the type of the motion vector detected at each feature point based on the transformation vector, the position of the feature point in the forward image, the distance of the object from the driver's vehicle, and the speed of the driver' s vehicle detected by the vehicle speed sensor 113. The vector classifying portion 262 supplies information representing the type of the detected motion vector and the position of the processed ROIs in the forward image to the object classifying portion 263.

As will be described with reference to Fig. 25, the object classifying portion 263 classifies the objects within the ROIs based on the motion vector classification results, the objects being classified into either an object that is moving (the object hereinafter also referred to as a moving object) or an object that is stationary (the object hereinafter also referred to as a stationary object). When the object classifying portion 263 classifies the object within the ROI as being the moving object, the object classifying portion 263 supplies information representing the position of the ROI containing the moving object in the forward image to the moving object classifying portion 264. On the other hand, when the object classifying portion 263 classifies the object within the ROI as being the stationary object, the object classifying portion 263 supplies information representing the position of the ROI containing the stationary object in the forward image to the stationary object classifying portion 265.

The moving object classifying portion 264 detects the type of the moving object within the ROI using a predetermined image recognition technique. The moving object classifying portion 264 supplies information representing the type of the moving object and the position of the ROI containing the moving object in the forward image to the output portion 133.

The stationary object classifying portion 265 detects the type of the stationary object within the ROI using a predetermined image recognition technique. The stationary object classifying portion 265 supplies information representing the type of the stationary object and the position of the ROI containing the stationary object in the forward image to the output portion 133.

Next, an obstacle detection process executed by the obstacle detection system 101 will be described with reference to the flowchart of Fig. 7. The process is initiated when the engine of the driver's vehicle is started.

In step S1, the laser radar 111 starts detecting objects. The laser radar 111 starts the supply of the object information including the position and relative speed of the detected objects to the obstacle detecting device 114. The object information supplied from the laser radar 111 is temporarily stored in a memory (not shown) or the like of the obstacle detecting device 114 so that portions of the obstacle detecting device 114 can use the object information.

In step S2, the camera 112 starts image capturing. The camera 112 starts the supply of the forward image captured in the forward area of the driver's vehicle to the obstacle detecting device 114. The forward image supplied from the camera 112 is temporarily stored in a memory (not shown) or the like of the obstacle detecting device 114 so that portions of the obstacle detecting device 114 can use the forward image.

In step S3, the vehicle speed sensor 113 starts detecting the vehicle speed. The vehicle speed sensor 113 starts the supply of the signal representing the detected vehicle speed to the position determining portion 151, the speed determining portion 152, and the vector classifying portion 262.

In step S4, the obstacle detecting device 114 executes an ROI setting process. The details of the ROI setting process will be described with reference to the flowchart of Fig. 8.

In step S31, the position determining portion 151 narrows down the process subject based on the position of the objects. Specifically, the position determining portion 151 narrows down the process subject by extracting the objects that satisfy the following expression (3) based on the position (X, Z) of the objects detected by the laser radar 111.

$$|X| < Xth \text{ and } Z < Zth \ldots (3)$$

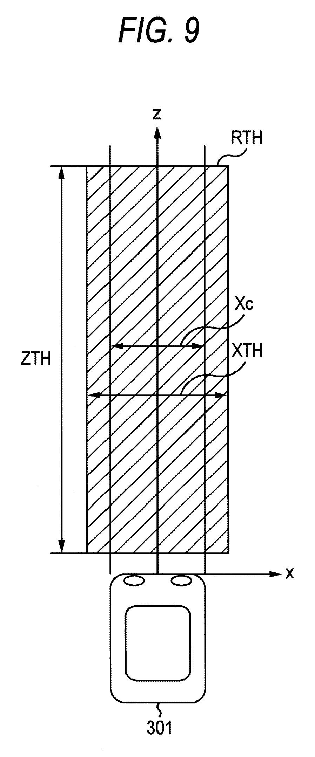

In the expression (3), Xth and Zth are predetermined threshold values. Therefore, if the vehicle 301 shown in Fig. 9 is the driver's vehicle, objects present within a detection region Rth having a width of Xth and a length of Zth in the forward area of the vehicle 301 are extracted.

The threshold value Xth is set to a value obtained by adding a predetermined length as a margin to the vehicle width (a width Xc of the vehicle 301 in Fig. 9) or to the lane width of the lanes along which the driver's vehicle travels.

The Zth is set to, for example, a value calculated based on the following expression (4).

$$Zth(m) = driver's\ vehicle\ speed\ (m/s) \times Tc\ (s)\ \dots\ (4)$$

In the expression, the time Tc is a constant set based on a collision time (TTC: Time to Collision) or the like, which is the time passed until the driver's vehicle traveling at a predetermined speed (for example, 60 km/h) collides with a pedestrian in the forward area of the driver's vehicle at a predetermined distance (for example, 100 meters).

With this, objects present outside the detection region Rth, where the likelihood of being collided with the driver's vehicle is low, are excluded from the process subject.

Incidentally, the detection region is a region set based on the likelihood of the driver's vehicle colliding with objects present within the region, and is not necessarily rectangular as shown in Fig. 9. In addition, in the case of a curved lane, for example, the width Xth of the detection region may be increased.

The position determining portion 151 supplies information representing the object extraction results to the speed determining portion 152.

In step S32, the speed determining portion 152 narrows down the process subject based on the speed of objects. Specifically, the speed determining portion 152 narrows down the process subject by extracting, from the objects extracted by the position determining portion 151, objects that satisfy the following expression (5).

$$|Vv(t)\ +\ dZ(t)|\ \leq\ \varepsilon\ \dots\ (5)$$

In the expression, Vv(t) represents the speed of the driver's vehicle at a time point t, and dZ(t) represents a relative speed of the object at a time point t in the z-axis direction (distance direction) with respect to the driver's vehicle. Incidentally, $\varepsilon$ is a predetermined threshold value.

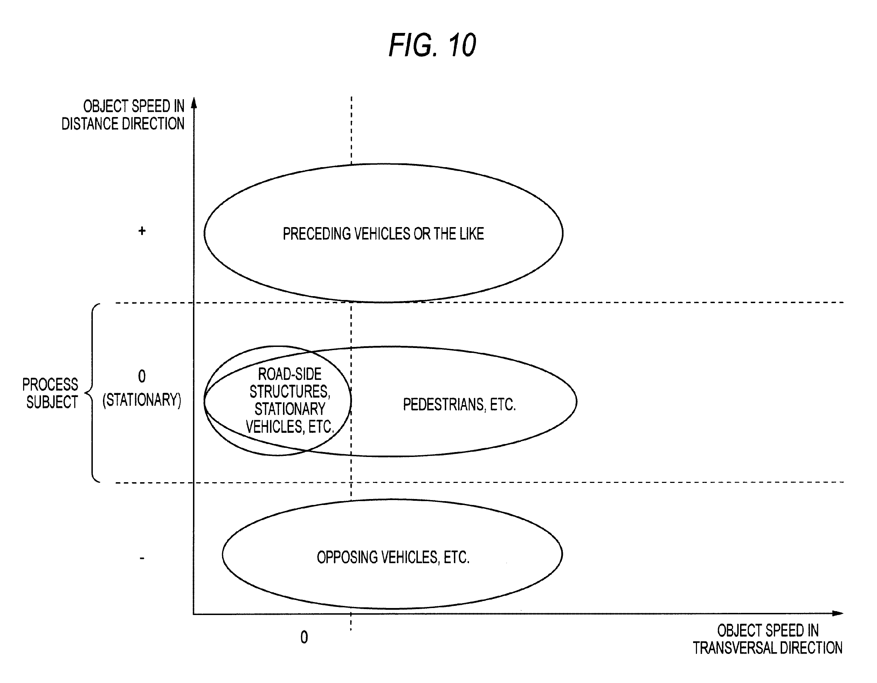

With this, as shown in Fig. 10, among objects present within the detection region, the objects, such as preceding vehicles or opposing vehicles, of which the speed in the distance direction of the driver's vehicle is greater than a predetermined threshold value, are excluded from the process subject. On the other hand, the objects, such as pedestrians, road-side structures, stationary vehicles, vehicles traveling in a direction transversal to the driver's vehicle, of which the speed in the distance direction of the driver's vehicle is equal to or smaller than the predetermined threshold value, are extracted as the process subject. Therefore, the preceding vehicles and the opposing vehicles, which are difficult to be discriminated from pedestrians for the image recognition using a motion vector, are excluded from the process subject. As a result, it is possible to decrease the processing load and to thus improve the detection performance.

The speed determining portion 152 supplies the object extraction results and the object information corresponding to the extracted objects to the ROI setting portion 161. The speed determining portion 152 also supplies information representing the object extraction results to the feature point density parameter setting portion 142.

In step S33, the ROI setting portion 161 sets the ROIs. An exemplary ROI setting method will be described with reference to Fig. 11.

First, the case will be considered in which a beam BM11 is reflected from an object 321 on the left side of Fig. 11. Although, in fact, the beam emitted from the laser radar 111 is of a vertically long elliptical shape, in Fig. 11, the beam is represented by a rectangle in order to simplify the descriptions. First, the central point OC11 of a rectangular region OR11 having substantially the same width and height as the beam BM11 is determined as the central point of the object 321. When the position of the central point OC11 in the radar coordinate system is expressed by (X1, Y1, Z1), X1 and Z1 are calculated from the object information supplied from the laser radar 111, and Y1 is calculated from the height of the position at which the laser radar 111 is mounted, from the ground level. Then, a region 322 having a height of 2A (m) and a width of 2B (m), centered on the central point OC11 is set as the ROI of the object 321. The value of 2A and 2B is set to a value obtained by adding a predetermined length as a margin to the size of a normal pedestrian.

Next, the case will be considered in which beams BM12-1 to BM12-3 are reflected from an object 323 on the right side of Fig. 11. In this case, beams of which the difference in distance between the reflection points is within a predetermined threshold value are determined as being reflected from the same object, and thus the beams BM12-1 to BM12-3 are grouped together. Next, the central point OC12 of a rectangular region OR12 having substantially the same width and height as the grouped beams BM12-1 to BM12-3 is determined as the central point of the object 323. When the position of the central point OC12 in the radar coordinate system is expressed by (X2, Y2, Z2), X2 and Z2 are calculated from the object information supplied from the laser radar 111, and Y2 is calculated from the height of the position at which the laser radar 111 is mounted, from the ground level. Then, a region 324 having a height of 2A (m) and a width of 2B (m), centered on the central point OC12 is set as the ROI of the object 323.

The position of the ROI for each of the objects extracted by the object extracting portion 141 is transformed from the position in the radar coordinate system into the position in the forward image, based on the following relational expressions (6) to (8).

$$\begin{bmatrix} XL \\ YL \\ ZL \end{bmatrix} = R \begin{bmatrix} Xc \\ Yc \\ Zc \end{bmatrix} + T \qquad \cdot \cdot \cdot (6)$$

$$Xp = X0 + \frac{F}{dXp} \cdot \frac{Xc}{Zc} \qquad \cdot \cdot \cdot (7)$$

$$Yp = Y0 + \frac{F}{dYp} \cdot \frac{Yc}{Zc} \qquad \cdot \cdot \cdot (8)$$

In the expressions, (XL, YL, ZL) represents coordinates in the radar coordinate system; (Xc, Yc, Zc) represents coordinates in the camera coordinate system; and (Xp, Yp) represents coordinates in the coordinate system (hereinafter also referred to as an image coordinate system) of the forward image. In the image coordinate system, the center (X0, Y0) of the forward image set by a well-known calibration method corresponds to a point of origin; the horizontal direction corresponds to the x-axis direction; the vertical direction corresponds to the y-axis direction; the right direction corresponds to the positive direction of the x-axis direction; and the upward direction corresponds to the positive direction of the y-axis direction. Incidentally, R represents a 3-by-3 matrix; and T represents a 3-by-1 matrix, both of which are set by a well-known camera calibration method. Incidentally, F represents a focal length of the camera 112; dXp represents a horizontal length of one pixel of the forward image; and dYp represents a vertical length of one pixel of the forward image.

With this, ROIs are set in the forward image for each of the extracted objects, the ROIs including the entire or a portion of the object and having a size corresponding to the distance to the object.

The detailed method of transforming the radar coordinate system to the image coordinate system is described in JP-A-2006-151125, for example.

The ROI setting portion 161 supplies information representing the position of each ROI in the forward image to the feature amount calculating portion 162. The ROI setting portion 161 also supplies information representing the position of each ROI in the forward image and in the radar coordinate system to the feature point density parameter setting portion 142. The ROI setting portion 161 also supplies the information representing the position of each ROI in the forward image and in the radar coordinate system and the object information corresponding to the object within each ROI to the output portion 133.

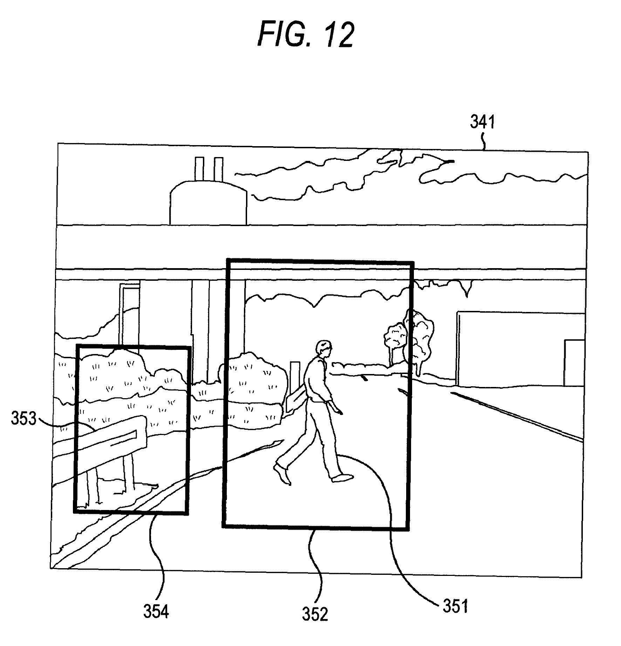

Fig. 12 shows an example of the forward image and the ROI. In the forward image 341 shown in Fig. 12, two ROIs are set; i.e., an ROI 352 containing a pedestrian 351 moving across the road in the forward area and an ROI 354 containing a portion of a guardrail 353 installed on the left side of the lanes are set. In the following, the obstacle detection process will be described using the forward image 341 as an example.

Referring to Fig. 7, in step S5, the feature amount calculating portion 162 selects one unprocessed ROI. That is, the feature amount calculating portion 162 selects one of the ROIs that have not undergone the processes of steps S6 to S9 from the ROIs set by the ROI setting portion 161. The ROI selected in step S5 will be also referred to as a select ROI.

In step S6, the obstacle detecting device 114 executes a feature point extraction process. The details of the feature point extraction process will be described with reference to the flowchart of Fig. 13.

In step S51, the feature amount calculating portion 162 calculates a feature amount. For example, the feature amount calculating portion 162 calculates the intensity at the corner of the image within the select ROI as the feature amount based on a predetermined technique (for example, the Harris corner detection method). The feature amount calculating portion 162 supplies information representing the position of the select ROI in the forward image and the feature amount of the pixels within the select ROI to the feature point extracting portion 163.

In step S52, the feature point extracting portion 163 extracts a feature point candidate. Specifically, the feature point extracting portion 163 extracts, as the feature point candidate, pixels of which the feature amount is greater than a predetermined threshold value, from the pixels within the select ROI.

In step S53, the feature point extracting portion 163 sorts the feature point candidate in the descending order of the feature amount.

In step S54, the feature point density parameter setting portion 142 sets a feature point density parameter. Specifically, the feature point extracting portion 163 supplies information representing the position of the select ROI in the forward image to the feature point density parameter setting portion 142. The feature point density parameter setting portion 142 calculates the position of the select ROI in the radar coordinate system. Also, the feature point density parameter setting portion 142 estimates the height (in units of pixel) of the pedestrian in the forward image based on the following expression (9), assuming the object within the select ROI as the pedestrian.

$$\text{height of pedestrian (pixel)} = \text{body length (m)} \times \text{focal length (pixel)} \div \text{distance (m)} \quad \text{... (9)}$$

In the expression (9), the body length is a constant (for example, 1.7 meters) based on the average or the like of the body length of the assumed pedestrian; the focal length is a value of the focal length of the camera 112 as represented by a pixel pitch of the imaging device of the camera 112; and the distance is a distance to the object within the select ROI, which is calculated by the position of the select ROI in the radar coordinate system.

Next, the feature point density parameter setting portion 142 calculates a feature point density parameter based on the following expression (10).

$$\text{feature point density parameter (pixel)} = \text{height of pedestrian (pixel)} \div \text{Pmax} \quad \text{... (10)}$$

In the expression, Pmax is a predetermined constant, which is set, for example, based on the number of feature points or the like, the number of feature points preferably extracted in the height direction of the pedestrian for detection of the movement of the pedestrian.

When it is assumed that the object in the forward image be the pedestrian, the feature point density parameter is a minimum value of the gap provided between the feature points such that the number of feature points extracted in the height direction of the image of the pedestrian is substantially constant regardless of the size of the pedestrian, that is, regardless of the distance to the pedestrian. That is, the feature point density parameter is set so as to decrease as the distance of the object within the select ROI from the driver's vehicle increases.

The feature point density parameter setting portion 142 supplies information representing the feature point density parameter to the feature point extracting portion 163.

In step S55, the feature point extracting portion 163 sets selection flags of the entire pixels within the ROI to ON. The selection flag is a flag representing whether the pixel can be set as the feature point; the selection flags of the pixels set as the feature point are set ON, and the selection flags of the pixels that cannot be set as the feature points are set OFF. The feature point extracting portion 163 first sets the selection flags of the entire pixels within the select ROI to ON so that the entire pixels within the select ROI can be set as the feature points.

In step S56, the feature point extracting portion 163 selects a feature point candidate on the highest order from unprocessed feature point candidates. Specifically, the feature point extracting portion 163 selects a feature point candidate on the highest order in the sorting order, that is, the feature point candidate having the greatest feature amount, from the feature point candidates that have not been subjected to the processes of steps S56 to S58 described later.

In step S57, the feature point extracting portion 163 determines whether the selection flag of the selected feature point candidate is ON. When it is determined that the selection flag of the selected feature point candidate is ON, the process of step S58 is performed.

In step S58, the feature point extracting portion 163 sets the selection flag of the pixels in the vicinity of the selected feature point candidate to OFF. Specifically, the feature point extracting portion 163 sets the selection flag of the pixels of which the distance from the selected feature point candidate is within the range of the feature point density parameter to OFF. With this, it is prevented that new feature points are extracted from the pixels of which the distance from the selected feature point candidate is within the range of the feature point density parameter.

In step S59, the feature point extracting portion 163 adds the selected feature point candidate to a feature point list. That is, the selected feature point candidate is extracted as the feature point.

On the other hand, when it is determined in step S57 that the selection flag of the selected feature point candidate is OFF, the processes of steps S58 and S59 are skipped so the selected feature point candidate is not added to the feature point list, and the process of step S60 is performed.

In step S60, the feature point extracting portion 163 determines whether the entire feature point candidates have been processed. When it is determined that the entire feature point candidates have not yet been processed, the process returns to the step S56. The processes of steps S56 to S60 are repeated until it is determined in step S60 that the entire feature point candidates have been processed. That is, the processes of steps S56 to S60 are performed for the entire feature point candidates within the ROI in the descending order of the feature amount.

When it is determined in step S60 that the entire feature point candidates have been processed, the process of step S61 is performed.

In step S61, the feature point extracting portion 163 outputs the extraction results, and the feature point extraction process stops. Specifically, the feature point extracting portion 163 supplies the position of the select ROI in the forward image and the feature point list to the vector detecting portion 164.

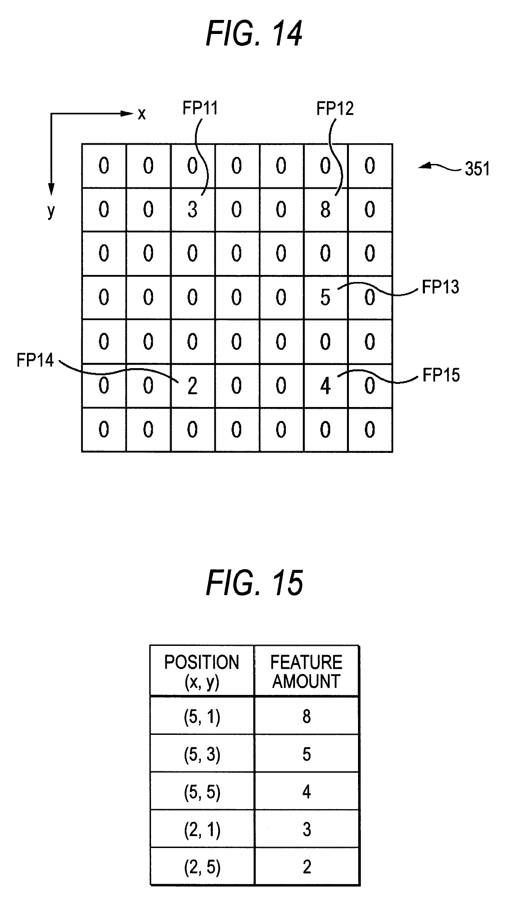

Hereinafter, a specific example of the feature point extraction process will be described with reference to Figs. 14 to 19.

Fig. 14 shows an example of the feature amount of each pixel within the ROI. Each square column within the ROI 351 shown in Fig. 14 represents a pixel, and a feature amount of the pixel is described within the pixel. The coordinates of each pixel within the ROI 351 are represented by a coordinate system in which the pixel at the top left corner of the ROI 351 is a point of origin (0, 0); the horizontal direction is the x-axis direction; and the vertical direction is the y-axis direction.

In step S52, if the pixels within the ROI 351 having a feature amount greater than 0 are extracted as the feature point candidate with a threshold value set to 0, the pixels at coordinates (2, 1), (5, 1), (5, 3), (2, 5), and (5, 5) are extracted as the feature point candidates FP11 to FP15.

In step S53, as shown in Fig. 15, in the descending order of the feature amount, the feature point candidates within the ROI 351 are sorted in the order of FP12, FP13, FP15, FP11, and FP14.

In step S54, the feature point density parameter is set; in the following, it will be described that the feature point parameter is set to two pixels.

In step S55, the selection flags of the entire pixels within the ROI 351 are set to ON.

In step S56, the feature point candidate FP12 on the highest order is first selected. In step S57, it is determined that the selection flag of the feature point candidate FP12 is ON. In step S58, the selection flags of the pixels of which the distance from the feature point candidate FP12 is within the range of two pixels are set to OFF. In step S59, the feature point candidate FP12 is added to the feature point list.

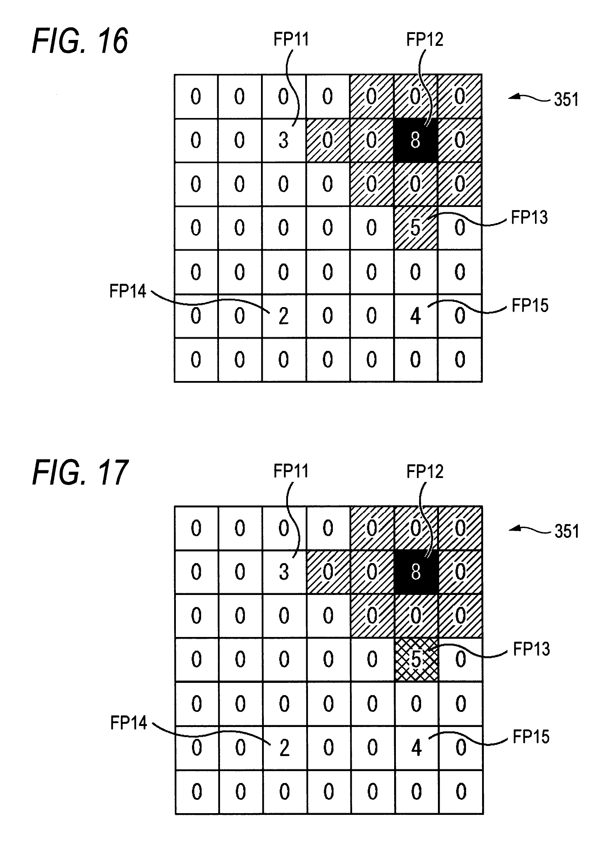

Fig. 16 shows the state of the ROI 351 at this time point. The hatched pixels in the drawing are the pixels of which the selection flag is set to OFF. At this time point, the selection flag of the feature point candidate FP13, of which the distance from the feature point candidate FP12 is two pixels, is set to OFF.

Thereafter, in step S60, it is determined that the entire feature point candidates have not yet been processed, and the process returns to the step S56. In step S56, the feature point candidate FP13 is subsequently selected.

In step S57, it is determined that the selection flag of the feature point candidate FP13 is OFF, and the processes of steps S58 and S59 are skipped; the feature point candidate FP13 is not added to the feature point list; and the process of step S60 is performed.

Fig. 17 shows the state of the ROI 351 at this time point. The feature point candidate FP13 is not added to the feature point list, and the selection flags of the pixels in the vicinity of the feature point candidate FP13 are not set to OFF. Therefore, the state of the ROI 351 does not change from the state shown in Fig. 16.

Thereafter, in step S60, it is determined that the entire feature point candidates have not yet been processed, and the process returns to the step S56. In step S56, the feature point candidate FP15 is subsequently selected.

In step S57, it is determined that the selection flag of the feature point candidate FP15 is ON. In step S58, the selection flags of the pixels of which the distance from the feature point candidate FP15 is within the range of two pixels are set to OFF. In step S59, the feature point candidate FP15 is added to the feature point list.

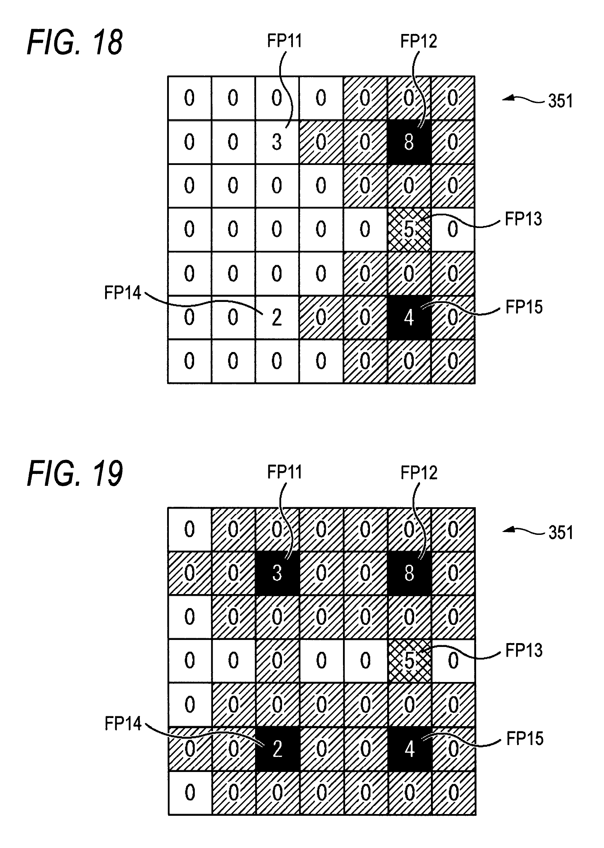

Fig. 18 shows the state of the ROI 351 at this time point. The feature point candidate FP12 and the feature point candidate FP15 are added to the feature point list, and the selection flags of the pixels, of which the distance from the feature point candidate FP12 or the feature point candidate FP15 is within the range of two pixels, are set to OFF.

Thereafter, the processes of steps S56 to S60 are performed on the feature point candidates in the order of FP11 and FP14. When the process has been completed for the feature point candidate FP14, it is determined in step S60 that the entire feature point candidates have been processed, and the process of step S61 is performed.

Fig. 19 shows the state of the ROI 351 at this time point. That is, the feature point candidates FP11, FP12, FP14, and FP15 are added to the feature point list, and the selection flags of the pixels, of which the distance from the feature point candidate FP11, FP12, FP14, or FP15 is within the range of two pixels, are set to OFF.

In step S61, the feature point list having the feature point candidates FP11, FP12, FP14, and FP15 registered therein are supplied to the vector detecting portion 164. That is, the feature point candidates FP11, FP12, FP14, and FP15 are extracted from the ROI 351 as the feature point.

In this way, the feature points are extracted from the feature point candidates in the descending order of the feature amount, while the feature point candidates, of which the distance from the extracted feature points is equal to or smaller than the feature point density parameter, are not extracted as the feature point. In other words, the feature points are extracted so that the gap between the feature points is greater than the feature point density parameter.

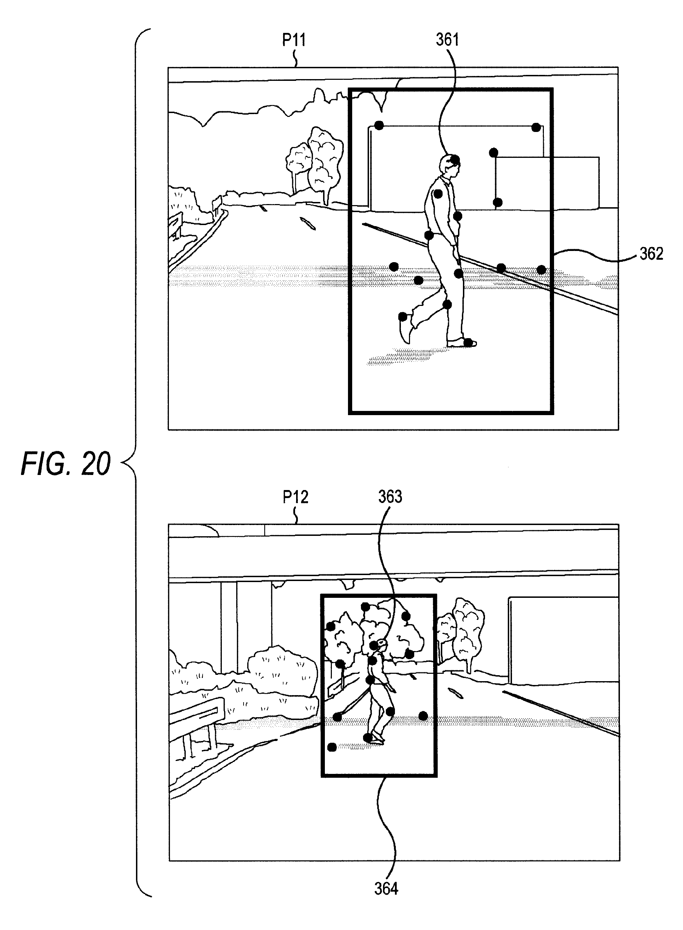

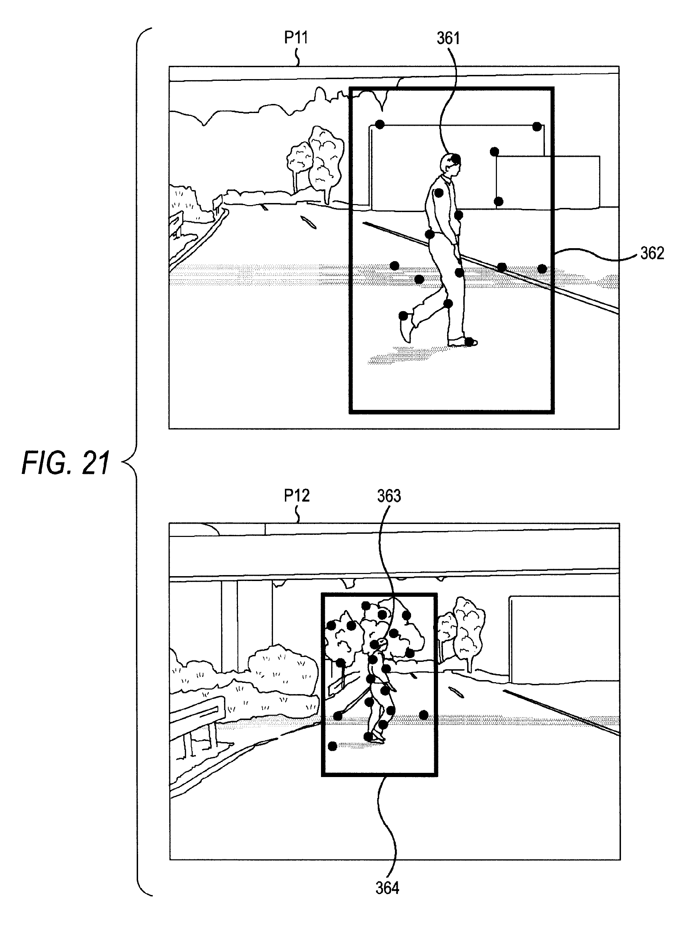

Here, referring to Figs. 20 and 21, the case in which the feature points are extracted based only on the value of the feature amount will be compared with the case in which the feature points are extracted using the above-described feature point extraction process. Fig. 20 shows an example for the case in which the feature points of the forward images P11 and P12 are extracted based only on the feature amount, and Fig. 21 shows an example for the case in which the feature points of the same forward images P11 and P12 are extracted using the above-described feature point extraction process. Incidentally, the black circles in the forward images P11 and P12 represent the feature points extracted.

In the case of extracting the feature points based only on the value of the feature amount, like the object 361 within the image P11 shown in Fig. 20, when the distance from the driver's vehicle to the object is small and the image of the object is large and clear, a sufficient number of feature points for precise detection of the movement of the object 361 is extracted within the ROI 362 corresponding to the object 361. However, like the object 363 within the image P12, when the distance from the driver's vehicle to the object is great and the image of the object is small and unclear, the number of feature points extracted within the ROI 364 corresponding to the object 363 decreases while the number of feature points extracted from areas other than the object 363 increases. That is, the likelihood of failing to extract a sufficient number of feature points for precise detection of the movement of the object 363 increases. In addition, to the contrary, although not shown, the number of feature points extracted from the ROI 362 becomes excessively large, increasing the processing load in the subsequent stages.

On the other hand, in the case of extracting the feature points using the above-described feature point extraction process, the feature points are extracted with a higher density as the distance from the driver's vehicle to the object increases. For this reason, as shown in Fig. 21, both within the ROI 362 of the image P11 and within the ROI 364 of the image P12, suitable numbers of feature points are extracted for precise detection of the movement of the object 361 or the object 363, respectively.

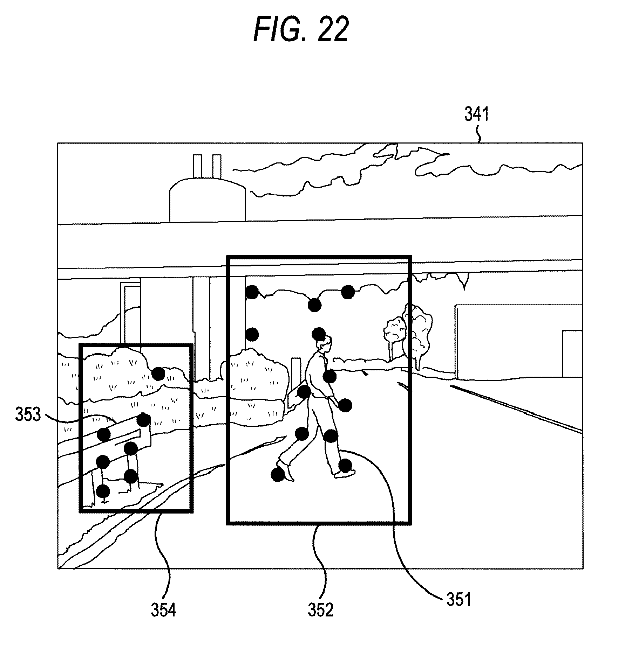

Fig. 22 shows an example of the feature points extracted from the forward image 341 shown in Fig. 12. The black circles in the drawing represent the feature points. The feature points are extracted at the corner and its vicinity of the images within the ROI 352 and the ROI 354.

Although the example of extracting the feature points based on the intensity at the corner of the image is shown in the above descriptions, as long as it is possible to extract the feature points suitable for the detection of the motion vector of the object, the feature points may be extracted using other feature amounts. Incidentally, the feature amount extracting technique is not limited to a specific technique but it is preferable to employ a technique that can detect the feature amount by a process in a precise, quick and simple manner.

Referring to Fig. 7, in step S7, the vector detecting portion 164 detects the motion vector. Specifically, the vector detecting portion 164 detects the motion vector at each feature point of the select ROI based on a predetermined technique. For example, the vector detecting portion 164 detects pixels within the forward image of the subsequent frame corresponding to the feature points within the select ROI so that a vector directed from each feature point to the detected pixel is detected as the motion vector at each feature point. The vector detecting portion 164 supplies information representing the detected motion vector to the rotation angle calculating portion 241. The vector detecting portion 164 also supplies information representing the detected motion vector and the position of the select ROI in the forward image to the vector transforming portion 261.

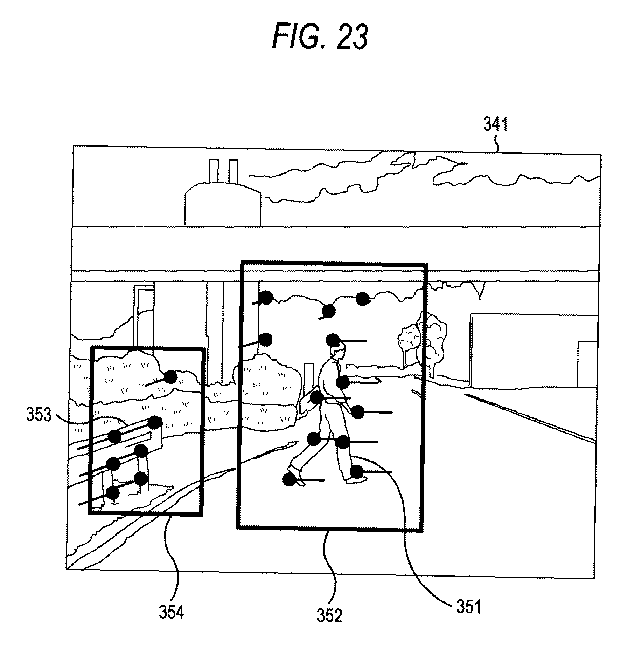

Fig. 23 shows an example of the motion vector detected from the forward image 341 shown in Fig. 12. The lines starting from the black circles in the drawing represent the motion vectors at the feature points.

A typical technique of the vector detecting portion 164 detecting the motion vector includes a well-known Lucas-Kanade method and a block matching method, for example. Incidentally, the motion vector detecting technique is not limited to a specific technique but it is preferable to employ a technique that can detect the motion vector by a process in a precise, quick and simple manner.

Referring to Fig. 7, in step S8, the rotation angle detecting portion 165 performs a rotation angle detection process. Here, the details of the rotation angle detection process will be described with reference to the flowchart of Fig. 24.

In step S81, the rotation angle calculating portion 241 extracts three motion vectors on a random basis. That is, the rotation angle calculating portion 241 extracts three motion vectors from the motion vectors detected by the vector detecting portion 164 on a random basis.

In step S82, the rotation angle calculating portion 241 calculates a temporary rotation angle using the extracted motion vectors. Specifically, the rotation angle calculating portion 241 calculates the temporary rotation angle of the camera 112 based on the expression (11) representing the relationship between the motion vector of a stationary object within the forward image and the rotation angle of the camera 112, i.e., the rotational movement component of the camera 112.

$$F \times Xp \times \theta + F \times Yp \times \psi - (Xp^2 + Yp^2) \times \varphi - v_x \times Xp + v_y \times Yp = 0 \ldots (11)$$

In the expression, F represents a focal length of the camera 112. The focal length F is substantially a constant because the focal length is uniquely determined for the camera 112. Incidentally, $v_x$ represents the x-axis directional component of the motion vector in the image coordinate system; $v_y$ represents the y-axis directional component of the motion vector in the image coordinate system; Xp represents the x-axis directional coordinate of the feature point corresponding to the motion vector in the image coordinate system; and Yp represents the y-axis directional coordinate of the feature point corresponding to the motion vector in the image coordinate system. Incidentally, $\theta$ represents the rotation angle (a pitch angle) of the camera 112 around the x axis in the camera coordinate system; $\psi$ represents the rotation angle (a yaw angle) of the camera 112 around the y axis in the camera coordinate system; and $\varphi$ represents the rotation angle (a roll angle) of the camera 112 around the z axis in the camera coordinate system.

The rotation angle calculating portion 241 calculates a temporary rotation angle of the camera 112 around each axis by solving a simultaneous equation obtained by substituting the x- and y-axis directional components of the extracted three motion vectors and the coordinates of corresponding feature points into the expression (11). The rotation angle calculating portion 241 supplies information representing the calculated temporary rotation angle to the error calculating portion 242.

Hereinafter, a method of deriving the expression (11) will be described.

When the position of a point P in a 3-dimensional space at a time point t in the camera coordinate system is represented by $Pc = (Xc\ Yc\ Zc)^T$, and when the position of a point on the forward image corresponding to the point P at a time point t in the image coordinate system is represented by $Pp = = (Xp\ Yp\ F)^T$, the relationship between Pc and Pp is expressed by the following expression (12).

$$Pp = \frac{Pc}{Zc} F \qquad \cdots (12)$$

By differentiating the expression (12) by a time t, the following expression (13) is obtained.

$$\frac{dPp}{dt} = \frac{d}{dt}\left[\frac{Pc}{Zc} F\right]$$

$$= \left[\frac{\dfrac{dPc}{dt} Zc - Pc \dfrac{dZc}{dt}}{Zc^2}\right] F$$

$$= \left[\frac{1}{Zc}\frac{dPc}{dt} - Pc\frac{1}{Zc^2}\frac{dPc^T}{dt} Ez\right] F$$

$$= \frac{1}{Zc}\left[F\frac{dPc}{dt} - Pp\frac{dPc^T}{dt} Ez\right] \qquad \cdots (13)$$

In the expression, Ez is a unit vector in the z-axis direction of the camera coordinate system and is represented as $Ez = (0\ 0\ 1)^T$.

Next, by expressing the movement component of the camera 112 between a time point t and a time point t+1, which is an inter-frame spacing of the camera 112, using a rotation matrix Rc and a translational vector Tc, the following expression (14) is obtained.

$$Pc_{t+1} = RcPc_t + Tc \quad \cdots \quad (14)$$

In the expression, $Pc_t$ represents the position of the point P at a time point t in the camera coordinate system, and $PC_{t+1}$ represents the position of the point P at a time point t+1 in the camera coordinate system. In addition, the translational vector is represented as $Tc = (t_x \; t_y \; t_z)^T$.

The rotation matrix Rc is expressed by the following expression (15) using the pitch angle $\theta$, yaw angle $\psi$, and roll angle $\varphi$ of the rotational movement of the camera 112 between a time point t and a time point t+1.

$$Rc = \begin{bmatrix} \cos\phi & -\sin\phi & 0 \\ \sin\phi & \cos\phi & 0 \\ 0 & 0 & 1 \end{bmatrix} \begin{bmatrix} \cos\psi & 0 & \sin\psi \\ 0 & 1 & 0 \\ -\sin\psi & 0 & \cos\psi \end{bmatrix} \begin{bmatrix} 1 & 0 & 0 \\ 0 & \cos\theta & -\sin\theta \\ 0 & \sin\theta & \cos\theta \end{bmatrix}$$

$$\cdots \; (15)$$

Here, because the time interval between a time point t and a time point t+1 is very small, it can be assumed that the values of the pitch angle $\theta$, yaw angle $\psi$, and roll angle $\varphi$ are extremely small. Therefore, by applying the following approximate expressions (16) to (20) to the expression (15), the following expression (21) is calculated.

$$\cos\theta = \cos\psi = \cos\varphi \approx 1 \; \dots \; (16)$$

$$\sin\theta \approx \theta \; \dots \; (17)$$

$$\sin\psi \approx \psi \; \dots \; (18)$$

$$\sin\varphi \approx \varphi \; \dots \; (19)$$

$$\psi\theta = \varphi\theta = \varphi\psi = \varphi\psi\theta \approx 0 \; \dots \; (20)$$

$$Rc \approx \begin{bmatrix} 1 & -\phi & 0 \\ \phi & 1 & 0 \\ 0 & 0 & 1 \end{bmatrix} \begin{bmatrix} 1 & 0 & \psi \\ 0 & 1 & 0 \\ -\psi & 0 & 1 \end{bmatrix} \begin{bmatrix} 1 & 0 & 0 \\ 0 & 1 & -\theta \\ 0 & \theta & 1 \end{bmatrix}$$

$$= \begin{bmatrix} 1 & \psi\theta-\phi & \psi+\phi\theta \\ \phi & \phi\psi\theta+1 & \phi\psi-\theta \\ -\psi & \theta & 1 \end{bmatrix}$$

$$\approx \begin{bmatrix} 1 & -\phi & \psi \\ \phi & 1 & -\theta \\ -\psi & \theta & 1 \end{bmatrix} \qquad \cdots (21)$$

Accordingly, RcPc can be expressed by the following expression (22).

$$RcPc = \begin{bmatrix} 1 & -\phi & \psi \\ \phi & 1 & -\theta \\ -\psi & \theta & 1 \end{bmatrix} \begin{bmatrix} Xc \\ Yc \\ Zc \end{bmatrix}$$

$$= \begin{bmatrix} Xc+(\psi Zc-\phi Yc) \\ Yc+(\phi Xc-\theta Zc) \\ Zc+(\theta Yc-\psi Xc) \end{bmatrix}$$

$$= Pc + \omega \times Pc \qquad \cdots (22)$$

In the expression, $\omega$ is $(\theta\ \psi\ \phi)^T$.

When seen in the camera coordinate system, the point P has been translated by -Tc and has been rotated by -$\omega$ between a time point t and a time point t+1. dPc/dt, which is a derivative of Pc by time t, can be expressed by the following expression (23) .

$$\frac{dPc}{dt} = -\frac{d\omega}{dt} \times Pc - \frac{dTc}{dt} \qquad \cdots (23)$$

By substituting the expression (23) into the expression (13), the following expression (24) is derived.

$$\frac{dPp}{dt} = \frac{1}{Zc}\left[ F\frac{dPc}{dt} - Pp\frac{dPc^T}{dt}Ez \right]$$

$$= \frac{1}{Zc}\left[ F\left(-\frac{d\omega}{dt}\times Pc-\frac{dTc}{dt}\right) - Pp\left(-\frac{d\omega}{dt}\times Pc-\frac{dTc}{dt}\right)^T Ez \right]$$

$$\cdots (24)$$

The vehicle (a driver's vehicle) on which the camera 112 is mounted performs a translational movement only in the front-to-rear direction, i.e., in only one-axis direction and does not translate in the left-to-right direction and the up-to-down direction. For this reason, the movement of the camera 112 can be modeled as a model in which the movement is restricted to the translation in z-axis direction and the rotation in the x-, y-, and z-axis directions in the camera coordinate system. By applying such a model, the expression (23) can be simplified to the following expression (25).

$$\frac{dPc}{dt} = -\frac{d\omega}{dt} \times Pc - \frac{dTc}{dt}$$

$$= \begin{bmatrix} -\psi Zc + \phi Yc \\ -\phi Xc + \theta Zc \\ \psi Xc - \theta Yc - t_z \end{bmatrix} \qquad \cdots (25)$$

By substituting and developing the expression (25) into the expression (24), the following expression (26) is derived.

$$\frac{dPp}{dt} = \frac{1}{Zc}\left[ F\left(-\frac{d\omega}{dt} \times Pc - \frac{dTc}{dt}\right) - Pp\left(-\frac{d\omega}{dt} \times Pc - \frac{dTc}{dt}\right)^{\mathsf{T}} E_z \right]$$

$$= \frac{F}{Zc}\begin{bmatrix} -\psi Zc + \phi Yc \\ -\phi Xc + \theta Zc \\ \psi Xc - \theta Yc - t_z \end{bmatrix} - \frac{Pp}{Zc}\left(-\psi Zc + \phi Yc \quad -\phi Xc + \theta Zc \quad \psi Pc - \theta Yc - t_z\right)\begin{bmatrix} 0 \\ 0 \\ 1 \end{bmatrix}$$

$$= F\begin{bmatrix} -\psi + \phi\frac{Yc}{Zc} \\ -\phi\frac{Xc}{Zc} + \theta \\ \psi\frac{Xc}{Zc} - \theta\frac{Yc}{Zc} - \frac{t_z}{Zc} \end{bmatrix} - Pp\left[\psi\frac{Pc}{Zc} - \theta\frac{Yc}{Zc} - \frac{t_z}{Zc}\right]$$

$$= \begin{bmatrix} -F\psi + Yp\phi \\ -Xp\phi + F\theta \\ Xp\psi - Yp\theta - \frac{t_z}{Zc}F \end{bmatrix} - Pp\left[\psi\frac{Xp}{F} - \theta\frac{Yp}{F} - \frac{t_z}{Zc}\right] \qquad \cdots (26)$$

Therefore, the motion vector (hereinafter referred to as a background vector) Vs at pixels on the stationary object in the forward image is expressed by the following expression (27).

$$Vs = \frac{dPp}{dt} = \begin{bmatrix} v_x \\ v_y \end{bmatrix} = \begin{bmatrix} -F\psi + Yp\phi - \frac{Xp^2}{F}\psi + \frac{XpYp}{F}\theta + \frac{Xpt_z}{Zc} \\ -Xp\phi + F\theta - \frac{XpYp}{F}\psi + \frac{Yp^2}{F}\theta + \frac{Ypt_z}{Zc} \end{bmatrix}$$

$$\cdots (27)$$

Here, by defining $\alpha$ as the following expression (28) and applying the expression (28) to the expression (27), the following expression (29) is derived.

$$\alpha = -\frac{Xp}{F}\psi + \frac{Yp}{F}\theta + \frac{t_z}{Zc} \qquad \cdots (28)$$

$$\begin{bmatrix} v_x \\ v_y \end{bmatrix} = \begin{bmatrix} -F\psi + Yp\phi + Xp\alpha \\ -Xp\phi + F\theta + Yp\alpha \end{bmatrix} \qquad \cdots (29)$$

By eliminating $\alpha$ from the expression (29), the following expression (30) is obtained.

$$F{\times}Xp{\times}\theta + F{\times}Yp{\times}\psi - (Xp^2 + Yp^2){\times}\varphi = v_x{\times}Xp - v_y{\times}Yp \cdots (30)$$

By placing the right-hand side of the expression (30) in the left-hand side, the above-described expression (11) is obtained.

When the focal length F, the x-axis directional component $v_x$ and the y-axis directional component $v_y$ of the motion vector, and the x-axis directional coordinate Xp and the y-axis directional coordinate Yp of the feature points are known, the expression (11) becomes a first-order linear expression of variables including a pitch angle $\theta$, a yaw angle $\psi$, and a roll angle $\varphi$. By using the expression (11), it is possible to calculate the pitch angle $\theta$, the yaw angle $\psi$, and the roll angle $\varphi$ using the solution of linear optimization problems. Therefore, the calculation of the pitch angle $\theta$, the yaw angle $\psi$, and the roll angle $\varphi$ becomes easy, and the detection precision of these rotation angles is improved.

Incidentally, since the expression (11) is derived from the calculation formula of the background vector Vs as specified by the expression (27), when the extracted three motion vectors are all the background vector, the calculated rotation angles are highly likely to be close to the actual values. When a motion vector at pixels on the moving object in the forward image (this motion vector hereinafter referred to as a moving object vector) is included in the extracted three motion vectors, the calculated rotation angles are highly likely to depart from the actual values of the camera 112.

In step S83, the error calculating portion 242 calculates an error when using the temporary rotation angle for other motion vectors. Specifically, the error calculating portion 242 calculates a value obtained, for each of the remaining motion vectors other than the three motion vectors used in the calculation of the temporary rotation angle, by substituting the temporary rotation angle, the x- and y-axis directional components of the remaining motion vectors, and the coordinates of corresponding feature points into the left-hand side of the expression (11), as the error of the temporary rotation angle for the motion vectors. The error calculating portion 242 supplies information correlating the motion vectors and the calculated errors with each other and information representing the temporary rotation angles to the selecting portion 243.

In step S84, the selecting portion 243 counts the number of motion vectors for which the error is within a predetermined threshold value. That is, the selecting portion 243 counts the number of motion vectors for which the error calculated by the error calculating portion 242 is within a predetermined threshold value, among the remaining motion vectors other than the motion vectors used in the calculation of the temporary rotation angle.

In step S85, the selecting portion 243 determines whether a predetermined number of data has been stored. If it is determined that the predetermined number of data has not yet been stored, the process returns to the step S81. The processes of steps S81 to S85 are repeated for a predetermined number of times until it is determined in step S85 that the predetermined number of data has been stored. In this way, a predetermined number of temporary rotation angles and a predetermined number of data representing the number of motion vectors for which the error when using the temporary rotation angles is within the predetermined threshold value are stored.

If it is determined in step S85 that the predetermined number of data has been stored, the process of step S86 is performed.

In step 586, the selecting portion 243 selects the temporary rotation angle with the largest number of motion vectors for which the error is within the predetermined threshold value as the rotation angle of the camera 112, and the rotation angle detection process is completed.

In most cases, the percentage of the stationary object in the forward image is high and thus the percentage of the background vector in the detected motion vectors is also high. Therefore, the rotation angle selected by the selecting portion 243 is highly likely to be the rotation angle of which the error for the background vector is the smallest, i.e., the rotation angle calculated based on the three background vectors. As a result, the rotation angle of which the value is very close to the actual rotation angle is selected. Therefore, the effect of the moving object vector on the detection results of the rotation angle of the camera 112 is suppressed and thus the detection precision of the rotation angle is improved.

The selecting portion 243 supplies information representing the selected rotation angle to the vector transforming portion 261.

Referring to Fig. 7, in step S9, the clustering portion 166 performs a clustering process. Here, the details of the clustering process will be described with reference to the flowchart of Fig. 25.

In step S71, the vector transforming portion 261 selects one unprocessed feature point. Specifically, the vector transforming portion 261 selects one feature point that has not been subjected to the processes of steps S72 and S73 from the feature points within the select ROI. In the following, the feature point selected in step S71 will also be referred to as a select feature point.

In step S72, the vector transforming portion 261 transforms the motion vector at the selected feature point based on the rotation angle of the camera 112. Specifically, from the above described expression (27), the motion vector Vr generated by the rotational movement of the camera 112 is calculated by the following expression (31).

$$ Vr = \begin{bmatrix} -F\psi + Yp\phi - \dfrac{Xp^2}{F}\psi + \dfrac{XpYp}{F}\theta \\ -Xp\phi + F\theta - \dfrac{XpYp}{F}\psi + \dfrac{Yp^2}{F}\theta \end{bmatrix} \qquad \cdots (31) $$

As is obvious from the expression (31), the magnitude of the component of the motion vector Vr generated by the rotational movement of the camera 112 is independent of the distance to the subject.

The vector transforming portion 261 calculates the motion vector (a transformation vector) generated by the movement of the subject at the select feature point and the movement of the driver's vehicle (the camera 112) in the distance direction by subtracting the component of the motion vector Vr as specified by the expression (31) (i.e., a component generated by the rotational movement of the camera 112) from the components of the motion vector at the select feature point.

In addition, for example, the transformation vector Vsc of the background vector Vs is theoretically calculated by the following expression (32) by subtracting the expression (31) from the above-described expression (27).

$$ Vsc = \begin{bmatrix} \dfrac{Xpt_z}{Zc} \\ \dfrac{Ypt_z}{Zc} \end{bmatrix} \qquad \cdots (32) $$

In addition, although detailed descriptions thereof are omitted, the moving object vector Vm in the forward image is theoretically calculated by the following expression (33).

$$ Vm = \begin{bmatrix} v_x \\ v_y \end{bmatrix} = \begin{bmatrix} -F\psi - \dfrac{Xp^2}{F}\psi + \dfrac{XpYp}{F}\theta + \dfrac{FdX - XpdZ + Xpt_z}{Zc} \\ F\theta - \dfrac{XpYp}{F}\psi + \dfrac{Yp^2}{F}\theta + \dfrac{FdY - YpdZ + Ypt_z}{Zc} \end{bmatrix} $$

$$ \cdots (33) $$

In the expression, dX, dY, and dZ represent the movement amounts of the moving object between a time point t and a time point t+1 in the x-, y-, and z-axis directions of the camera coordinate system, respectively.

Therefore, the transformation vector Vmc of the moving object vector Vm is theoretically calculated by the following expression (34) by subtracting the expression (31) from the expression (33).

$$Vmc = \begin{bmatrix} \dfrac{FdX - XpdZ + Xpt_z}{Z} \\ \dfrac{FdY - YpdZ + Ypt_z}{Z} \end{bmatrix} \qquad \cdots (34)$$

The vector transforming portion 261 supplies information representing the calculated transformation vector and the position of the select ROI in the forward image to the vector classifying portion 262.

In step S73, the vector classifying portion 262 detects the type of the motion vector. Specifically, the vector classifying portion 262 first acquires information representing the distance from the driver's vehicle to the object within the select ROI from the ROI setting portion 161.

Since the component generated by the rotational movement of the camera 112 is excluded from the transformation vector, by comparing the transformation vector at the select feature point and the background vector calculated theoretically at the select feature point with each other, it is possible to detect whether the motion vector at the select feature point is the moving object vector or the background vector. In other words, it is possible to detect whether the select feature point is a pixel on the moving object or a pixel on the stationary object.

When the direction in the x-axis direction (in the horizontal direction of the forward image) of the transformation vector at the select feature point is different from that of the theoretical background vector (a motion vector at the select feature point when the camera 112 is not rotating and the select feature point is a pixel on the stationary object), the vector classifying portion 262 determines the motion vector at the select feature point as being a moving object vector when the following expression (35) is satisfied, while the vector classifying portion 262 determines the motion vector at the select feature point as being a background vector when the following expression (35) is not satisfied.

$$|v_{CX}| > 0 \; \dots \; (35)$$

In the expression, $v_{CX}$ represents an x-axis directional component of the transformation vector. That is, the motion vector at the select feature point is determined as being the moving object vector when the directions in the x-axis direction of the transformation vector at the select feature point and the theoretical background vector are different from each other, while the motion vector at the select feature point is determined as being the background vector when the directions in the x-axis direction are the same.

When the direction in the x-axis direction of the transformation vector at the select feature point is the same as that of the theoretical background vector, the vector classifying portion 262 determines the motion vector at the select feature point as being the moving object vector when the following expression (36) is satisfied, while the vector classifying portion 262 determines the motion vector at the select feature point as being the background vector when the following expression (36) is not satisfied.

$$|v_{CX}| > Xp \times t_z \div Zc \; \dots \; (36)$$

When the directions in the x-axis direction of the transformation vector at the select feature point and the theoretical background vector are the same, the motion vector at the select feature point is determined as being the moving object vector when the magnitude of the x-axis directional component of the transformation vector is greater than that of the right-hand side of the expression (36), while the motion vector at the select feature point is determined as being the background vector when the magnitude of the x-axis directional component of the transformation vector is equal to or smaller than that of the right-hand side of the expression (36).

The right-hand side of the expression (36) is the same as the x-axis component of the transformation vector Vsc of the background vector as specified by the above-described expression (32). That is, the right-hand side of the expression (36) represents the magnitude of the horizontal component of the theoretical motion vector at the select feature point when the camera 112 is not rotating and the select feature point is on the stationary object.

In step S74, the vector classifying portion 262 determines whether the entire feature points have been processed.

When it is determined that the entire feature points have not yet been processed, the process returns to the step S71. The processes of steps S71 to S74 are repeated until it is determined in step S74 that the entire feature points have been processed. That is, the types of the motion vectors at the entire feature points within the ROI are detected.

Meanwhile, when it is determined in step S74 that the entire feature points have been processed, the process of step S75 is performed.

In step S75, the object classifying portion 263 detects the type of the object. Specifically, the vector classifying portion 262 supplies information representing the type of each motion vector within the select ROI and the position of the select ROI in the forward image to the object classifying portion 263.

The object classifying portion 263 detects the type of the objects within the select ROI based on the classification results of the motion vectors within the select ROI. For example, the object classifying portion 263 determines the objects within the select ROI as being the moving object when the number of moving object vectors within the select ROI is equal to or greater than a predetermined threshold value. Meanwhile the object classifying portion 263 determines the objects within the select ROI as being the stationary object when the number of moving object vectors within the select ROI is smaller than the predetermined threshold value. Alternatively, the object classifying portion 263 determines the objects within the select ROI as being the moving object when the ratio of the moving object vectors to the entire motion vectors within the select ROI is equal to or greater than a predetermined threshold value, for example. Meanwhile, the object classifying portion 263 determines the objects within the select ROI as being the stationary object when the ratio of the stationary object vectors to the entire motion vectors within the select ROI is smaller than the predetermined threshold value.

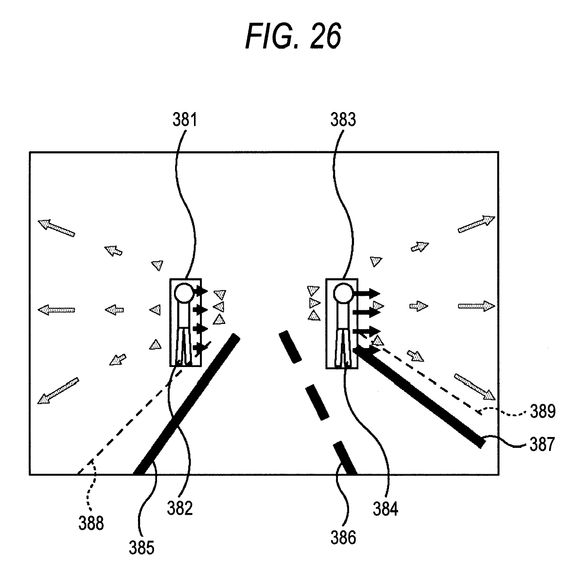

Hereinafter, the specific example of the object classification process will be described with reference to Fig. 26. Fig. 26 is a diagram schematically showing the forward image, in which the black arrows in the drawing represent the motion vectors of the object 382 within the ROI 381 and the motion vectors of the object 384 within the ROI 383; and other arrows represent the background vectors. As shown in Fig. 26, the background vectors change their directions at a boundary substantially at the center of the forward image in the x-axis direction; the magnitudes thereof increase as they go closer to the left and right ends. Incidentally, lines 385 to 387 represent lane markings on the road; and lines 388 and 389 represent auxiliary lines for indicating the boundaries of the detection region.

As shown in Fig. 26, the object 382 moves in a direction substantially opposite to the direction of the background vector. Therefore, since the directions in the x-axis direction of the motion vectors of the object 382 and the theoretical background vector of the object 382 are different from each other, the motion vectors of the object 382 are determined as being the moving object vector based on the above-described expression (35), and the object 382 is classified as the moving object.

On the other hand, the object 384 moves in a direction substantially the same as the direction of the background vector. That is, the directions in the x-axis direction of the motion vectors of the object 384 and the theoretical background vector of the object 384 are the same. In this case, the motion vectors of the object 384 correspond to the sum of the component generated by the movement of the driver' s vehicle and the component generated by the movement of the object 384, and the magnitude thereof is greater than the magnitude of the theoretical background vector. For this reason, the motion vectors of the object 384 are determined as being the moving object vector based on the above-described expression (36), and the object 384 is classified as the moving object.

In this way, it is possible to detect whether the object is the moving object or not in a precise manner regardless of the relationship between the movement direction of the object and the direction of the theoretical background vector.

As described in JP-A-6-282655, for example, when the moving objects are detected based only on the directions of the motion vector and the theoretical background vector in the x-axis direction, it is possible to classify the object 382 moving in a direction substantially opposite to the direction of the background vector as the moving object but it is not possible to classify the object 384 moving in a direction substantially the same as the direction of the background vector as the moving object.

Referring to Fig. 25, in step S76, the object classifying portion 263 determines whether the object is the moving object. When the object classifying portion 263 determines the object within the select ROI as being the moving object based on the processing results in step S75, the process of step S77 is performed.

In step S77, the moving object classifying portion 264 detects the type of the moving object, and the clustering process is completed. Specifically, the object classifying portion 263 supplies information representing the position of the select ROI in the forward image to the moving object classifying portion 264. The moving object classifying portion 264 detects whether the moving object, which is the object within the select ROI, is a vehicle, using a predetermined image recognition technique, for example. Incidentally, since in the above-described ROI setting process of step S4, the preceding vehicles and the opposing vehicles are excluded from the process subject, by this process, it is detected whether the moving object within the select ROI is the vehicle traveling in the transversal direction of the driver's vehicle.

In this way, since the detection subject is narrowed down to the moving object and it is detected whether the narrowed-down detection subject is the vehicle traveling in the transversal direction of the driver's vehicle, it is possible to improve the detection precision. When it is determined that the moving object within the select ROI is not a vehicle, the moving object is an object other than a vehicle that moves within the detection region, and the likelihood of being a person increases.

The moving object classifying portion 264 supplies information representing the type of the object within the select ROI and the position of the select ROI in the forward image to the output portion 133.

On the other hand, when it is determined in step S76 that the object within the select ROI is a stationary object, the process of step S78 is performed.

In step S78, the stationary object classifying portion 265 detects the type of the stationary object, and the clustering process is completed. Specifically, the object classifying portion 263 supplies information representing the position of the select ROI in the forward image to the stationary object classifying portion 265. The stationary object classifying portion 265 determines whether the stationary object, which is the object within the select ROI, is a person, using a predetermined image recognition technique, for example. That is, it is detected whether the stationary object within the select ROI is a person or other objects (for example, a road-side structure, a stationary vehicle, etc.).

In this way, since the detection subject is narrowed down to the stationary object and it is detected whether the narrowed-down detection subject is a stationary person, it is possible to improve the detection precision.

The stationary object classifying portion 265 supplies information representing the type of the object within the select ROI and the position of the select ROI in the forward image to the output portion 133.

Referring to Fig. 7, in step S10, the feature amount calculating portion 162 determines whether the entire ROIs have been processed. When it is determined that the entire ROIs have not yet been processed, the process returns to the step S5. The processes of steps S5 to S10 are repeated until it is determined in step S10 that the entire ROIs have been processed. That is, the types of the objects within the entire set ROIs are detected.

In step S11, the output portion 133 supplies the detection results. Specifically, the output portion 133 supplies information representing the detection results including the position, movement direction, and speed of the objects in the radar coordinate system to the vehicle control device 115, the objects having a high likelihood of being a person and including the object within the ROI, from which a moving object other than a vehicle is detected, among the ROIs from which the moving object is detected and the object within the ROI, from which a person is detected, among the ROIs from which the stationary object is detected.

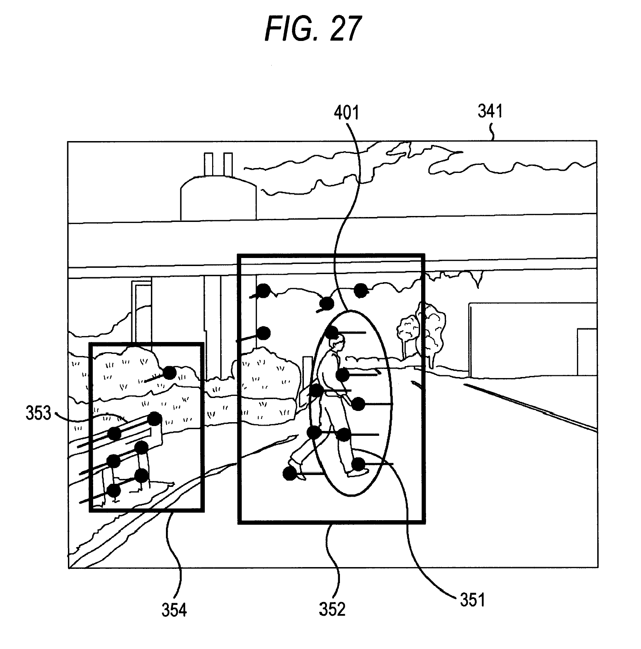

Fig. 27 is a diagram showing an example of the detection results for the forward image 341 shown in Fig. 12. In the example, an object 351 within an area 401 of the ROI 352 is determined as being highly likely to be a person, and the information representing the detection results including the position, movement direction, and speed of the object 351 in the radar coordinate system is supplied to the vehicle control device 115.

In step S12, the vehicle control device 115 executes a process based on the detection results. For example, the vehicle control device 115 outputs a warning signal to urge users to avoid contact or collision with the detected person by outputting images or sound using a display (not shown), a device (not shown), a speaker (not shown), or the like. In addition, the vehicle control device 115 controls the speed or traveling direction of the driver's vehicle so as to avoid the contact or collision with the detected person.

In step S13, the obstacle detection system 101 determines whether the process is to be finished. When it is determined that the process is not to be finished, the process returns to the step S4. The processes of steps S4 to S13 are repeated until it is determined in step S13 that the process is to be finished.

On the other hand, when the engine of the driver's vehicle stops and it is determined in step S13 that the process is to be finished, the obstacle detection process is finished.

In this way, it is possible to detect whether the objects present in the forward area of the driver's vehicle is a moving object or a stationary object in a precise manner. As a result, it is possible to improve the performance of detecting a person present in the forward area of the driver's vehicle.

In addition, since the region subjected to the detection process is restricted to within the ROI, it is possible to decrease the processing load, and to thus speed up the processing speed or decrease the cost of devices necessary for the detection process.

In addition, since the density of the feature points extracted from the ROI is appropriately set in accordance with the distance to the object, it is possible to improve the detection performance and to thus prevent the number of feature points extracted from becoming unnecessarily large and thus increasing the processing load of the detection.

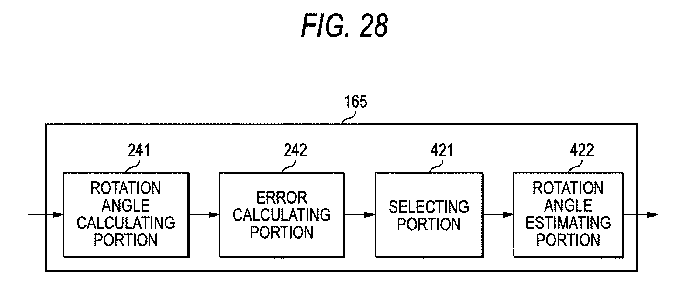

Next, other embodiments of the rotation angle detecting portion 165 will be described with reference to Figs. 28 to 31.

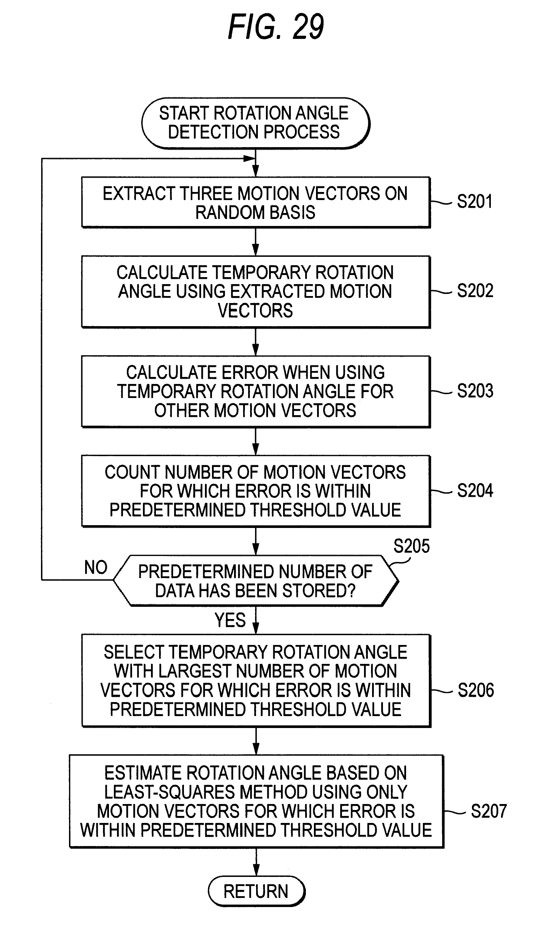

First, a second embodiment of the rotation angle detecting portion 165 will be described with reference to Figs. 28 and 29.

Fig. 28 is a block diagram showing a functional construction of a second embodiment of the rotation angle detecting portion 165. The rotation angle detecting portion 165 shown in Fig. 28 detects the rotation angle of the camera 112 by the combined use of the least-squares method and the RANSAC, one of the robust estimation techniques. The rotation angle detecting portion 165 shown in Fig. 28 is configured to include a rotation angle calculating portion 241, an error calculating portion 242, a selecting portion 421, and a rotation angle estimating portion 422. In the drawing, portions corresponding to those of Fig. 5 will be denoted by the same reference numerals, and repeated descriptions will be omitted for the processes that are identical to those of Fig. 5.

Like the selecting portion 243 of Fig. 5, the selecting portion 421 selects one of the temporary rotation angles calculated by the rotation angle calculating portion 241, based on the number of motion vectors for which the error is within a predetermined threshold value. Then, the selecting portion 421 supplies information representing the motion vector for which the error when using the selected temporary rotation angle is within a predetermined threshold value to the rotation angle estimating portion 422.

As will be described with reference to Fig. 29, the rotation angle estimating portion 422 estimates the rotation angle based on the least-squares method using only the motion vectors for which the error is within the predetermined threshold value, and supplies information representing the estimated rotation angle to the vector transforming portion 261.

Next, details of the rotation angle detection process of step S8 in Fig. 7, executed by the rotation angle detecting portion 165 of Fig. 28 will be described with reference to the flowchart of Fig. 29.

The processes of steps S201 to S205 are the same as the above-described processes of steps S81 to S85 in Fig. 24, and the descriptions thereof will be omitted. With such processes, a predetermined number of temporary rotation angles and a predetermined number of data representing the number of motion vectors for which the error when using the temporary rotation angles is within the predetermined threshold value are stored.

In step S206, the selecting portion 421 selects a temporary rotation angle with the largest number of motion vectors for which the error is within the predetermined threshold value. Then, the selecting portion 421 supplies information representing the motion vector for which the error when using the selected temporary rotation angle is within the predetermined threshold value to the rotation angle estimating portion 422.

In step S207, the rotation angle estimating portion 422 estimates the rotation angle based on the least-squares method using only the motion vectors for which the error is within the predetermined threshold value, and the rotation angle detection process is completed. Specifically, the rotation angle estimating portion 422 derives an approximate expression of the expression (11) based on the least-squares method using the motion vector as specified by the information supplied from the selecting portion 421, i.e., using the component of the motion vector for which the error when using the temporary rotation angle selected by the selecting portion 421 is within the predetermined threshold value and the coordinate values of the corresponding feature points. In this way, variables in the expression (11), namely, the pitch angle $\theta$, yaw angle $\psi$, and roll angle $\varphi$, of which the value is unknown, are estimated. Then, the rotation angle estimating portion 422 supplies information representing the estimated rotation angle to the vector transforming portion 261.

According to the rotation angle detection process of Fig. 29, compared with the above-described rotation angle detection process of Fig. 24, it is possible to improve the detection precision of the rotation angle without substantially increasing the processing time.

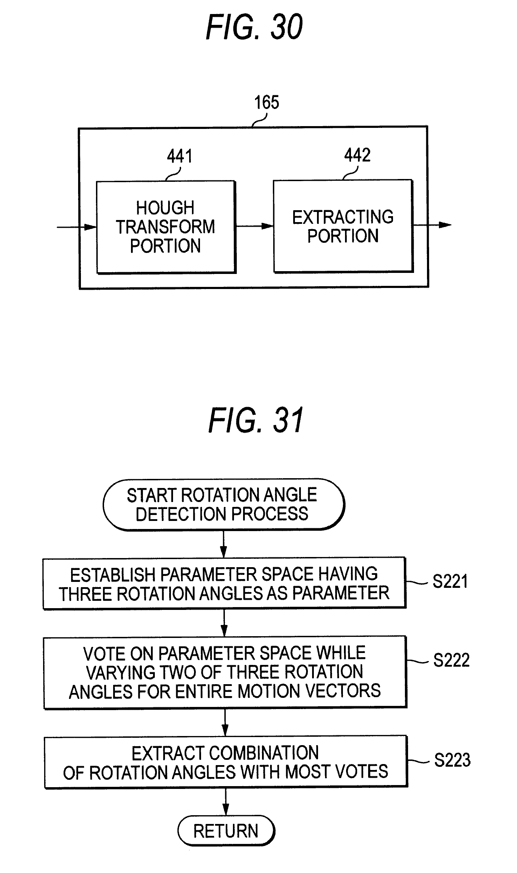

Next, a third embodiment of the rotation angle detecting portion 165 will be described with reference to Figs. 30 and 31.

Fig. 30 is a block diagram showing a functional construction of a third embodiment of the rotation angle detecting portion 165. The rotation angle detecting portion 165 shown in Fig. 30 detects the rotation angle of the camera 112 by the use of the Hough transform, one of the robust estimation techniques. The rotation angle detecting portion 165 shown in Fig. 30 is configured to include a Hough transform portion 441 and an extracting portion 442.

The Hough transform portion 441 acquires information representing the detected motion vector from the vector detecting portion 164. As will be described with reference to Fig. 31, the Hough transform portion 441 performs a Hough transform on the above-described expression (11) for the motion vector detected by the vector detecting portion 164 and supplies information representing the results of the Hough transform to the extracting portion 442.

The extracting portion 442 extracts a combination of rotation angles with the most votes based on the result of the Hough transform by the Hough transform portion 441 and supplies information representing the extracted combination of rotation angles to the vector transforming portion 261.

Next, details of the rotation angle detection process of step S8 in Fig. 7, executed by the rotation angle detecting portion 165 of Fig. 29 will be described with reference to the flowchart of Fig. 31.

In step S221, the Hough transform portion 441 establishes a parameter space having three rotation angles as a parameter. Specifically, the Hough transform portion 441 establishes a parameter space having, as a parameter, three rotation angles of the pitch angle $\theta$, the yaw angle $\psi$, and the roll angle $\varphi$, among the elements expressed in the above-described expression (11), that is, a parameter space constructed by three axes of the pitch angle $\theta$, the yaw angle $\psi$, and the roll angle $\varphi$. The Hough transform portion 441 partitions each axis at a predetermined range to divide the parameter space into a plurality of regions (hereinafter also referred to as a bin).

In step S222, the Hough transform portion 441 votes on the parameter space while varying two of the three rotation angles for the entire motion vectors. Specifically, the Hough transform portion 441 selects one of the motion vectors and substitutes the x- and y-axis directional components of the selected motion vector and the x- and y-axis directional coordinates of the corresponding feature points into the above-described expression (11). The Hough transform portion 441 varies two of the pitch angle θ, the yaw angle ψ, and the roll angle φ in the expression (11) at predetermined intervals of angle to calculate the value of the remaining one rotation angle and votes on the bins of the parameter space including the combination of values of the three rotation angles. That is, a plurality of combinations of values of the three rotation angles is calculated for one motion vector, and a plurality of votes are voted on the parameter space. The Hough transform portion 441 performs such a process for the entire motion vectors. The Hough transform portion 441 supplies information representing the number of votes voted on each bin of the parameter space as the results of the Hough transform to the extracting portion 442.

In step S223, the extracting portion 442 extracts the combination of rotation angles with the most votes, and the rotation angle detection process is completed. Specifically, the extracting portion 442 extracts the bin of the parameter space with the most votes based on the results of the Hough transform acquired from the Hough transform portion 441. The extracting portion 442 extracts one of the combinations of the rotation angles included in the extracted bin. For example, the extracting portion 442 extracts a combination of the rotation angles in which the pitch angle, the yaw angle, and the roll angle in the extracted bin have the median value. The extracting portion 442 supplies information representing the combination of the extracted rotation angles to the vector transforming portion 261.

According to the rotation angle detection process of Fig. 31, compared with the above-described rotation angle detection processes of Figs. 24 and 29, it is possible to further suppress the effect of the moving object vector on the detection results of the rotation angle of the camera 112 and to further improve the detection precision of the rotation angle, although the processing time increases.

In the above descriptions, a model in which the direction of the translational movement of the camera 112 is restricted to the z-axis direction has been exemplified. In the following, the case in which the direction of the translational movement is not restricted will be considered.

In the case of not restricting the direction of the translational movement, the above-described expression (23) can be expressed by the following expression (37).

$$\frac{dPc}{dt} = -\frac{d\omega}{dt} \times Pc - \frac{dTc}{dt}$$

$$= \begin{pmatrix} -\psi Zc + \phi Yc - t_x \\ -\phi Xc + \theta Zc - t_y \\ \psi Xc - \theta Yc - t_z \end{pmatrix} \qquad \cdots (37)$$

By substituting and developing the expression (37) into the above-described expression (24), the expression (38) is derived.

$$\frac{dPp}{dt} = \frac{1}{Zc}\left[F\left[-\frac{d\omega}{dt}\times Pc - \frac{dTc}{dt}\right] - Pp\left[-\frac{d\omega}{dt}\times Pc - \frac{dTc}{dt}\right]^T Ez\right]$$

$$= \frac{F}{Zc}\begin{bmatrix} -\psi Zc + \phi Yc - t_x \\ -\phi Xc + \theta Zc - t_y \\ \psi Xc - \theta Yc - t_z \end{bmatrix} - \frac{Pp}{Zc}\left(-\psi Zc + \phi Yc - t_x \quad -\phi Xc + \theta Zc - t_y \quad \psi Xc - \theta Yc - t_z\right)\begin{bmatrix} 0 \\ 0 \\ 1 \end{bmatrix}$$

$$= F\begin{bmatrix} -\psi + \phi\dfrac{Yc}{Zc} - \dfrac{t_x}{Zc} \\ -\phi\dfrac{Xc}{Zc} + \theta - \dfrac{t_y}{Zc} \\ \psi\dfrac{Xc}{Zc} - \theta\dfrac{Yc}{Zc} - \dfrac{t_z}{Zc} \end{bmatrix} - Pp\left[\psi\dfrac{Xc}{Zc} - \theta\dfrac{Yc}{Zc} - \dfrac{t_z}{Zc}\right]$$

$$= \begin{bmatrix} -F\psi + Yp\phi - \dfrac{t_x}{Zc}F \\ -Xp\phi + F\theta - \dfrac{t_y}{Zc}F \\ Xp\psi - Yp\theta - \dfrac{t_z}{Zc}F \end{bmatrix} - Pp\left[\psi\dfrac{Xp}{F} - \theta\dfrac{Yp}{F} - \dfrac{t_z}{Zc}\right] \qquad \cdots (38)$$

Therefore, the background vector Vs at pixels on the stationary object in the forward image is expressed by the following expression (39).

$$Vs = \frac{dPp}{dt} = \begin{bmatrix} v_x \\ v_y \end{bmatrix} = \begin{bmatrix} -F\psi + Yp\phi - \dfrac{t_x}{Zc}F - \dfrac{Xp^2}{F}\psi + \dfrac{XpYp}{F}\theta + \dfrac{Xpt_z}{Zc} \\ -Xp\phi + F\theta - \dfrac{t_y}{Zc}F - \dfrac{XpYp}{F}\psi + \dfrac{Yp^2}{F}\theta + \dfrac{Ypt_z}{Zc} \end{bmatrix}$$

$$\cdots (39)$$

By eliminating Zc from the expression (39), the following expression (40) is derived.

$$(Ypt_z - Ft_y)\left\{v_x - \left[-F\psi + Yp\phi - \frac{Xp^2}{F}\psi + \frac{XpYp}{F}\theta\right]\right\}$$

$$= (Xpt_z - Ft_x)\left\{v_y - \left[-Xp\phi + F\theta - \frac{XpYp}{F}\psi + \frac{Yp^2}{F}\theta\right]\right\} \quad \cdots (40)$$

Here, the direction of the translational movement of the driver's vehicle is restricted to one-axis direction, and thus two-axis directional components among the three-axis directional components of the translational movement of the camera 112 can be expressed by using the remaining one-axis directional component. Therefore, by expressing $t_x$ as $at_z$ (a: constant) and $t_y$ as $bt_z$ (b: constant), the expression (44) can be derived from the expression (40) through the following expressions (41) to (43).

$$(Yp t_z - F t_y)\left\{ v_x - \left[ -F\psi + Yp\phi - \frac{Xp^2}{F}\psi + \frac{XpYp}{F}\theta \right] \right\}$$

$$= (Xp t_z - F t_x)\left\{ v_y - \left[ -Xp\phi + F\theta - \frac{XpYp}{F}\psi + \frac{Yp^2}{F}\theta \right] \right\} \quad \cdots (41)$$

$$(Yp t_z - Fb t_z)\left\{ v_x - \left[ -F\psi + Yp\phi - \frac{Xp^2}{F}\psi + \frac{XpYp}{F}\theta \right] \right\}$$

$$= (Xp t_z - Fa t_z)\left\{ v_y - \left[ -Xp\phi + F\theta - \frac{XpYp}{F}\psi + \frac{Yp^2}{F}\theta \right] \right\} \quad \cdots (42)$$

$$t_z (Yp - Fb)\left\{ v_x - \left[ -F\psi + Yp\phi - \frac{Xp^2}{F}\psi + \frac{XpYp}{F}\theta \right] \right\}$$

$$= t_z (Xp - Fa)\left\{ v_y - \left[ -Xp\phi + F\theta - \frac{XpYp}{F}\psi + \frac{Yp^2}{F}\theta \right] \right\} \quad \cdots (43)$$

$$(Yp - Fb)\left\{ v_x - \left[ -F\psi + Yp\phi - \frac{Xp^2}{F}\psi + \frac{XpYp}{F}\theta \right] \right\}$$

$$= (Xp - Fa)\left\{ v_y - \left[ -Xp\phi + F\theta - \frac{XpYp}{F}\psi + \frac{Yp^2}{F}\theta \right] \right\} \quad \cdots (44)$$

Like the above-described expression (11), when the focal length F, the x-axis directional component $v_x$ and the y-axis directional component $v_y$ of the motion vector, and the x-axis directional coordinate Xp and the y-axis directional coordinate Yp of the feature points are known, the expression (44) becomes a first-order linear expression of variables including a pitch angle $\theta$, a yaw angle $\psi$, and a roll angle $\phi$. By using the expression (44), it is possible to calculate the pitch angle $\theta$, the yaw angle $\psi$, and the roll angle $\phi$ using the solution of linear optimization problems. Therefore, the calculation of the pitch angle $\theta$, the yaw angle $\psi$, and the roll angle $\phi$ becomes easy, and the detection precision of these rotation angles is improved.

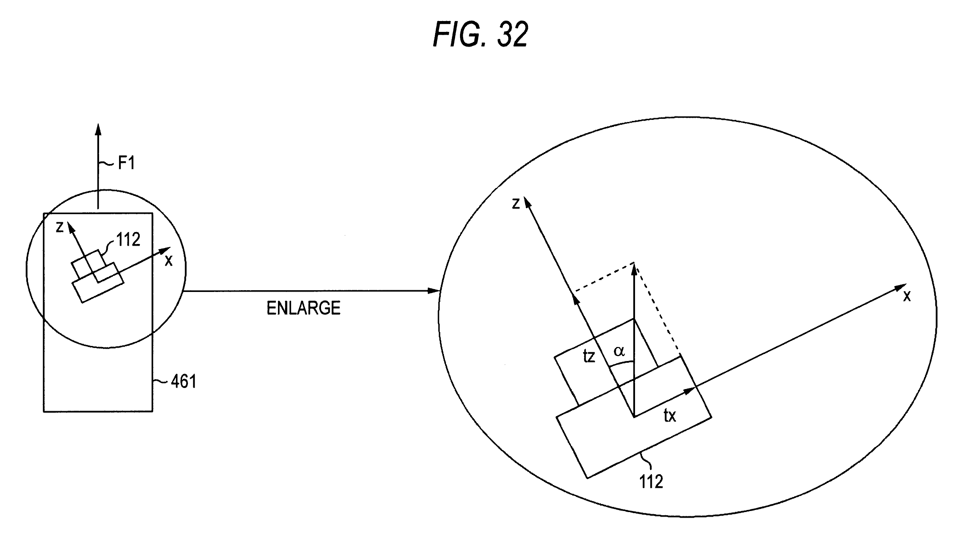

For example, as illustrated in Fig. 32, when the optical axis (the z-axis in the camera coordinate system) of the camera 112 is mounted in the left-to-right direction of the vehicle 461 so as to be inclined with respect to the movement direction F1, the camera 112 performs a translational movement in the x- and z-axis directions accompanied by the movement of the vehicle 461. Therefore, in this case, it is not possible to apply the model in which the direction of the translational movement of the camera 112 is restricted to one-axis direction of the z-axis direction. However, by measuring an angle $\alpha$ between the z axis of the camera coordinate system and the movement direction F of the vehicle, the $t_x$ can be expressed as $t_x = t_z \tan\alpha$ ($\tan\alpha$: constant). Thus, the pitch angle $\theta$, the yaw angle $\psi$, and the roll angle $\phi$ can be calculated by using the expression (44).

Similarly, when the camera 112 is mounted in the up-to-down direction of the vehicle 461 so as to be inclined with respect to the movement direction F or when the camera 112 is mounted in both the up-to-down direction and the left-to-right direction of the vehicle 461 so as to be inclined with respect to the movement direction F, the pitch angle $\theta$, the yaw angle $\psi$, and the roll angle $\phi$ of the rotational movement of the camera 112 can be calculated by using the expression (44).

When the direction of the translational movement of the camera 112 is restricted to the z-axis direction and a condition of $t_x = 0$ and $t_y = 0$ is used in the expression (40), the expression (50) can be derived from the expression (40) through the following expressions (45) to (49).

$$Yp t_z \left\{ v_x - \left[ -F\psi + Yp\phi - \frac{Xp^2}{F}\psi + \frac{XpYp}{F}\theta \right] \right\}$$

$$= Xp t_z \left\{ v_y - \left[ -Xp\phi + F\theta - \frac{XpYp}{F}\psi + \frac{Yp^2}{F}\theta \right] \right\} \qquad \cdots (45)$$

$$Yp \left\{ v_x - \left[ -F\psi + Yp\phi - \frac{Xp^2}{F}\psi + \frac{XpYp}{F}\theta \right] \right\}$$

$$= Xp \left\{ v_y - \left[ -Xp\phi + F\theta - \frac{XpYp}{F}\psi + \frac{Yp^2}{F}\theta \right] \right\} \qquad \cdots (46)$$

$$v_x Yp - \left[ -F\psi + Yp\phi - \frac{Xp^2}{F}\psi + \frac{XpYp}{F}\theta \right] Yp$$

$$= v_y Xp - \left[ -Xp\phi + F\theta - \frac{XpYp}{F}\psi + \frac{Yp^2}{F}\theta \right] Xp \qquad \cdots (47)$$

$$v_x Yp - (-F\psi + Yp\phi) Yp = v_y Xp - (-Xp\phi + F\theta) Xp \qquad \cdots (48)$$

$$v_x Yp - (-F\psi + Yp\phi) Yp = v_y Xp - (-Xp\phi + F\theta) Xp \qquad \cdots (49)$$

$$FXp\theta + FYp\psi - (Xp^2 + Yp^2)\phi = v_y Xp - v_x Yp \qquad \cdots (50)$$

This expression (50) coincides with the above-described expression (30).

When the direction of the translational movement of the camera 112 is restricted to the x-axis direction and a condition of $t_y = 0$ and $t_z = 0$ is used in the expression (40), the expression (52) can be derived from the expression (40) through the following expression (51).

$$0 = -F t_x \left\{ v_y - \left[ -Xp\phi + F\theta - \frac{XpYp}{F}\psi + \frac{Yp^2}{F}\theta \right] \right\}$$

$$= v_y - \left[ -Xp\phi + F\theta - \frac{XpYp}{F}\psi + \frac{Yp^2}{F}\theta \right] \qquad \cdots (51)$$

$$\left[ F + \frac{Yp^2}{F} \right]\theta - \frac{XpYp}{F}\psi - Xp\phi = v_y \qquad \cdots (52)$$

Like the above-described expressions (11) and (44), when the focal length F, the x-axis directional component

$v_x$ and the y-axis directional component $v_y$ of the motion vector, and the x-axis directional coordinate Xp and the y-axis directional coordinate Yp of the feature points are known, the expression (52) becomes a first-order linear expression of variables including a pitch angle $\theta$, a yaw angle $\psi$, and a roll angle $\varphi$.

When the direction of the translational movement of the camera 112 is restricted to the x-axis direction and a condition of $t_x = 0$ and $t_z = 0$ is used in the expression (40), the expression (55) can be derived from the expression (40) through the following expressions (53) and (54).

$$-Ft_y\left\{v_x-\left[-F\psi+Yp\phi-\frac{Xp^2}{F}\psi+\frac{XpYp}{F}\theta\right]\right\}=0 \qquad \cdots (53)$$

$$v_x-\left[-F\psi+Yp\phi-\frac{Xp^2}{F}\psi+\frac{XpYp}{F}\theta\right]=0 \qquad \cdots (54)$$

$$\frac{XpYp}{F}\theta-\left[F+\frac{Xp^2}{F}\right]\psi+Yp\phi=v_x \qquad \cdots (55)$$

Like the above-described expressions (11), (44), and (52), when the focal length F, the x-axis directional component $v_x$ and the y-axis directional component $v_y$ of the motion vector, and the x-axis directional coordinate Xp and the y-axis directional coordinate Yp of the feature points are known, the expression (55) becomes a first-order linear expression of variables including a pitch angle $\theta$, a yaw angle $\psi$, and a roll angle $\varphi$.

Without being limited to the above-described example of the vehicle, when the direction of the translational movement of the mobile object mounted on the camera is restricted to one-axis direction, the rotation angle, which is a component of the rotational movement of the camera, can be calculated by using the above-described expression (44) regardless of the attaching position or direction of the camera. In addition, when the optical axis (z axis) of the camera is parallel or perpendicular to the direction of the translational movement of the mobile object, in other words, when one axis of the camera coordinate system is parallel to the direction of the translational movement of the mobile object, by applying a model in which the direction of the translational movement of the camera is restricted to the direction of the mobile object performing the translational movement, the rotation angle of the camera can be calculated by using any one of the expressions (11), (52), and (55).

In the above descriptions, the example has been shown in which the position, movement direction, speed, or the like of a person present in the forward area of the driver's vehicle are output as the detection results from the obstacle detecting device 114. However, for example, the type, position, movement direction, speed or the like of the entire detected moving objects and the entire detected stationary objects may be output as the detection results. Alternatively, for example, the position, movement direction, speed, or the like of an object of a desired type such as a vehicle traveling in the transversal direction may be output as the detection results.

In addition, according to the needs, the moving object classifying portion 264 and the stationary object classifying portion 265 may be configured to perform higher precision image recognition in order to classify the type of the moving object or the stationary object in a more detailed manner.

If it is not necessary to classify the type of the moving object or the stationary object, the type of the moving object or the stationary object may not need to be detected, and the position, movement direction, speed or the like of the moving object or the stationary object may be output as the detection results.

In the ROI setting process of Fig. 8, objects having a speed greater than a predetermined threshold value were excluded from the process subject. However, to the contrary, only the objects having a speed greater than a predetermined threshold value may be used as the process subject. With this, it is possible to decrease the processing load of the detection without deteriorating the precision of detecting the opposing vehicles and the preceding vehicles.

In the ROI setting process of Fig. 8, ROIs of the objects having a speed greater than a predetermined threshold value may be determined, and regions other than the determined ROIs may be used as the process subject.

In addition, the feature point extracting technique of Fig. 13 may be applied to the feature point extraction in the image recognition, for example, in addition to the above-described feature point extraction for detection of the motion vector.

In the above descriptions, the example of detecting objects in the forward area of the vehicle has been shown. However, the present invention can be applied to the case of detecting objects in areas other than the forward area.

In the above descriptions, the example has been shown in which the feature point density parameter is set based on the number of feature points which is preferably extracted in the height direction of an image. However, for example, the feature point density parameter may be set based on the number of feature points which is preferably extracted per a predetermined area of the image.

The robust estimation technique used in detecting the rotation angle of the camera is not limited to the above-described example, but other techniques (for example, M estimation) may be employed.

The robust estimation may not be performed. In this case, the background vector may be extracted from the detected motion vectors, for example, based on the information or the like supplied from the laser radar 111, and the rotation angle of the camera may be detected using the extracted background vector.

The above-described series of processes of the obstacle detecting device 114 may be executed by hardware or software. When the series of processes of the obstacle detecting device 114 are executed by software, programs constituting the software are installed from a computer recording medium to a computer integrated into specific-purpose hardware or to a general-purpose personal computer or the like capable of executing various functions by installing various programs therein.

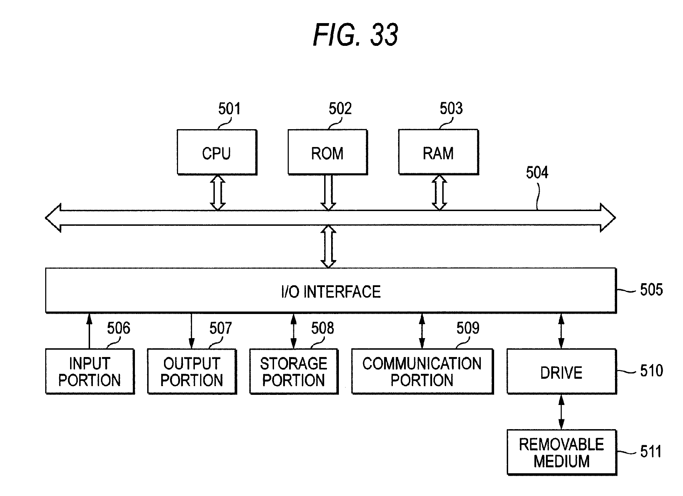

Fig. 33 is a block diagram showing an example of a hardware configuration of a computer which executes the above-described series of processes of the obstacle detecting device 114 by means of programs.

In the computer, a CPU (Central Processing Unit) 501, a ROM (Read Only Memory) 502, and a RAM (Random Access Memory) 503 are interconnected by a bus 504.

An I/O interface 505 is connected to the bus 504. The I/O interface 505 is connected to an input portion 506 configured by a keyboard, a mouse, a microphone, or the like, to an output portion 507 configured by a display, a speaker, or the like, to a storage portion 508 configured by a hard disk, a nonvolatile memory, or the like, to a communication portion 509 configured by a network interface or the like, and to a drive 510 for driving a removable medium 511 such as a magnetic disc, an optical disc, an optomagnetic disc, or a semiconductor memory.

In the computer having such a configuration, the CPU 501 loads programs stored in the storage portion 508 onto the RAM 503 via the I/O interface 505 and the bus 504 and executes the programs, whereby the above-described series of processes are executed.

The programs executed by the computer (the CPU 501) are recorded on the removable medium 511 which is a package medium configured by a magnetic disc (inclusive of flexible disc), an optical disc (CD-ROM: Compact Disc-Read Only Memory), a DVD (Digital Versatile Disc), an optomagnetic disc, or a semiconductor memory, or the like, and are provided through a wired or wireless transmission medium, called the local area network, the Internet, or the digital satellite broadcasting.

The programs can be installed onto the storage portion 508 via the I/O interface 505 by mounting the removable medium 511 onto the drive 510. In addition, the programs can be received to the communication portion 509 via a wired or wireless transmission medium and be installed into the storage portion 508. Besides, the programs may be installed in advance into the ROM 502 or the storage portion 508.

The programs executed by the computer may be a program configured to execute a process in a time-series manner according to the order described in the present specification, or may be a program configured to execute a process in a parallel manner, or on an as needed basis, in which the process is executed when there is a call.

The terms for system used in the present specification mean an overall device constructed by a plurality of devices, means, or the like.

The embodiments of the present invention are not limited to the above-described embodiments, and various modifications are possible without departing from the spirit of the present invention.

**Claims**

1. A detection device (101) that detects a rotational movement component of a camera (112) mounted on a mobile object performing a translational movement in only one axis direction, the detection device (101) comprising:

   a detecting means for detecting the rotational movement component of the camera (112) using a motion vector of a stationary object within an image captured by the camera (112) and a relational expression that represents the relationship between the motion vector and the rotational movement component of the camera (112), based on a motion vector at feature points extracted within the image, the relational expression derived by expressing two-axis directional components among three-axis directional components of a translational movement of the camera (112) using a remaining one-axis directional component.

2. The detection device (101) according to Claim 1, wherein the relational expression is expressed by a linear expression of a yaw angle, a pitch angle, and a roll angle of the rotational movement of the camera (112).

3. The detection device (101) according to Claim 1, wherein when the focal length of the camera (112) is F, the x- and y-axis directional coordinates of the feature points are Xp and Yp, respectively, the x- and y-axis directional components of the motion vector at the feature points are $v_x$ and $v_y$, respectively, the pitch angle, yaw angle, and roll angle of the rotational movement of the camera (112) are $\theta$, $\psi$, and $\varphi$, respectively, the focal length of the camera (112) is F, the translational movement component in the z-axis direction of the camera (112) is $t_z$, and the translational movement components in the x- and y-axis direction of the camera (112) are $t_x=at_z$ (a: constant) and $t_y=bt_z$ (b: constant), respectively, the detecting means detects the rotational movement component of the camera (112) using the following relational expression:

$$(Yp-Fb)\left\{v_x-\left[-F\psi+Yp\phi-\frac{Xp^2}{F}\psi+\frac{XpYp}{F}\theta\right]\right\}$$

$$=(Xp-Fa)\left\{v_y-\left[-Xp\phi+F\theta-\frac{XpYp}{F}\psi+\frac{Yp^2}{F}\theta\right]\right\}.$$

4. The detection device (101) according to Claim 1, wherein when the direction of the mobile object performing the translational movement is substantially parallel or perpendicular to the optical axis of the camera (112), the detecting means detects the rotational movement component of the camera (112) using a simplified expression of the relational expression by applying a model in which the direction of the translational movement of the camera (112) is restricted to the direction of the mobile object performing the translational movement.

5. The detection device (101) according to Claim 4, wherein the mobile object is a vehicle,
the camera (112) is mounted on the vehicle so that the optical axis of the camera (112) is substantially parallel to the front-to-rear direction of the vehicle, and
the detecting means detects the rotational movement component of the camera (112) using the simplified expression of the relational expression by applying the model in which the direction of the translational movement of the camera (112) is restricted to the front-to-rear direction of the vehicle.

6. The detection device (101) according to Claim 1, wherein the detecting means detects the rotational movement component of the camera (112) based on the motion vector at the feature point on the stationary object among the feature points.

7. The detection device (101) according to Claim 1, wherein the detecting means performs a robust estimation so as to suppress the effect on the detection results of the motion vector at the feature point on a moving object among the feature points.

8. A detection method of a detection device (101) for detecting a rotational movement component of a camera (112) mounted on a mobile object performing a translational movement in only one axis direction, the detection method comprising:

a detecting step of detecting the rotational movement component of the camera (112) using a motion vector of a stationary object within an image captured by the camera (112) and a relational expression that represents the relationship between the motion vector and the rotational movement component of the camera (112), based on a motion vector at feature points extracted within the image, the relational expression derived by expressing two-axis directional components among three-axis directional components of a translational movement of the camera (112) using a remaining one-axis directional component.

9. A program for causing a computer to execute a detection process for detecting a rotational movement component of a camera (112) mounted on a mobile object performing a translational movement in only one axis direction, the detection process comprising:

a detecting step of detecting the rotational movement component of the camera (112) using a motion vector of a stationary object within an image captured by the camera (112) and a relational expression that represents the relationship between the motion vector and the rotational movement component of the camera (112), based on a motion vector at feature points extracted within the image, the relational expression derived by expressing two-axis directional components among three-axis directional components of a translational movement of the camera (112) using a remaining one-axis directional component.

## FIG. 1

EP 1 959 675 A2

## FIG. 2

EP 1 959 675 A2

# FIG. 3

## FIG. 4

*FIG. 5*

165

241

| ROTATION ANGLE CALCULATING PORTION |
|---|

242

| ERROR CALCULATING PORTION |
|---|

243

| SELECTING PORTION |
|---|

## FIG. 6

166

261 VECTOR TRANSFORMING PORTION

262 VECTOR CLASSIFYING PORTION

263 OBJECT CLASSIFYING PORTION

264 MOVING OBJECT CLASSIFYING PORTION

265 STATIONARY OBJECT CLASSIFYING PORTION

EP 1 959 675 A2

## FIG. 7

```
        ( START OBSTACLE DETECTION PROCESS )
                        |
        +-------------------------------+
        |   START DETECTING OBJECT      |----S1
        +-------------------------------+
                        |
        +-------------------------------+
        |   START IMAGE CAPTURING        |----S2
        +-------------------------------+
                        |
        +-------------------------------+
        |  START DETECTING VEHICLE SPEED |----S3
        +-------------------------------+
                        |
        +-------------------------------+
        |      ROI SETTING PROCESS      |----S4
        +-------------------------------+
                        |
        +-------------------------------+
        |   SELECT ONE UNPROCESSED ROI  |----S5
        +-------------------------------+
                        |
        +-------------------------------+
        |          FEATURE               |
        |  POINT EXTRACTION PROCESS      |----S6
        +-------------------------------+
                        |
        +-------------------------------+
        |   DETECT MOVEMENT VECTOR      |----S7
        +-------------------------------+
                        |
        +-------------------------------+
        |     CLUSTERING PROCESS        |----S8
        +-------------------------------+
                        |
        +-------------------------------+
        |  ROTATION ANGLE DETECTION     |
        |         PROCESS                |----S9
        +-------------------------------+
                        |
        NO  < ENTIRE ROIS HAVE BEEN >----S10
            <    PROCESSED?         >
                   YES |
        +-------------------------------+
        |   OUTPUT DETECTION RESULTS    |----S11
        +-------------------------------+
                        |
        +-------------------------------+
        |  EXECUTE PROCESS ACCORDING    |
        |   TO DETECTION RESULTS        |----S12
        +-------------------------------+
                        |
        NO  <   FINISH PROCESS?   >----S13
                   YES |
                ( END )
```

# FIG. 8

```
┌────────────────────────────────────┐
│      START ROI SETTING PROCESS      │
└────────────────────────────────────┘
                  │
                  ▼
┌────────────────────────────────────┐
│     NARROW DOWN PROCESS SUBJECT     │── S31
│      BASED ON POSITION OF OBJECT    │
└────────────────────────────────────┘
                  │
                  ▼
┌────────────────────────────────────┐
│     NARROW DOWN PROCESS SUBJECT     │── S32
│        BASED ON OBJECT SPEED        │
└────────────────────────────────────┘
                  │
                  ▼
┌────────────────────────────────────┐
│               SET ROI               │── S33
└────────────────────────────────────┘
                  │
                  ▼
            ┌──────────┐
            │  RETURN  │
            └──────────┘
```

## FIG. 9

301

# FIG. 10

OBJECT SPEED IN
DISTANCE DIRECTION

+

PRECEDING VEHICLES OR THE LIKE

PROCESS
SUBJECT

0
(STATIONARY)

ROAD-SIDE
STRUCTURES,
STATIONARY
VEHICLES, ETC.

PEDESTRIANS, ETC.

-

OPPOSING VEHICLES, ETC.

0

OBJECT SPEED IN
TRANSVERSAL DIRECTION

EP 1 959 675 A2

FIG. 11

# FIG. 12

## FIG. 13

```
        ( START FEATURE POINT
          EXTRACTION PROCESS )
                  │
                  ▼
        ┌─────────────────────────┐
        │ CALCULATE FEATURE AMOUNT │──S51
        └─────────────────────────┘
                  │
                  ▼
        ┌─────────────────────────┐
        │        EXTRACT          │──S52
        │ FEATURE POINT CANDIDATES │
        └─────────────────────────┘
                  │
                  ▼
        ┌──────────────────────────────────┐
        │ SORT FEATURE POINT CANDIDATES IN  │──S53
        │ DESCENDING ORDER OF FEATURE AMOUNT │
        └──────────────────────────────────┘
                  │
                  ▼
        ┌─────────────────────────┐
        │ SET FEATURE POINT DENSITY │──S54
        │        PARAMETER         │
        └─────────────────────────┘
                  │
                  ▼
        ┌─────────────────────────┐
        │  SET SELECTION FLAGS OF  │──S55
        │ ENTIRE PIXELS WITHIN ROI TO ON │
        └─────────────────────────┘
                  │
                  ▼
        ┌──────────────────────────────────┐
        │ SELECT FEATURE POINT CANDIDATE ON │
        │ HIGHEST ORDER FROM UNPROCESSED    │──S56
        │ FEATURE POINT CANDIDATES          │
        └──────────────────────────────────┘
                  │
                  ▼          S57
   NO  ╱ SELECTION FLAG OF SELECTED FEATURE ╲
 ◀─────  POINT CANDIDATE IS SET TO ON?      ╲
        ╲                                    ╱
                  │ YES
                  ▼
        ┌─────────────────────────┐
        │ SET SELECTION FLAG OF PIXELS IN │
        │ VICINITY OF SELECTED FEATURE    │──S58
        │ POINT CANDIDATE TO OFF          │
        └─────────────────────────┘
                  │
                  ▼
        ┌─────────────────────────┐
        │ ADD SELECTED FEATURE POINT │──S59
        │ CANDIDATE TO FEATURE POINT LIST │
        └─────────────────────────┘
                  │
                  ▼          S60
   NO  ╱ ENTIRE FEATURE POINT CANDIDATES ╲
 ◀─────  HAVE BEEN PROCESSED?             ╲
        ╲                                  ╱
                  │ YES
                  ▼
        ┌─────────────────────────┐
        │ OUTPUT EXTRACTION RESULTS │──S61
        └─────────────────────────┘
                  │
                  ▼
              ( RETURN )
```

## FIG. 14

## FIG. 15

| POSITION (x, y) | FEATURE AMOUNT |
|---|---|
| (5, 1) | 8 |
| (5, 3) | 5 |
| (5, 5) | 4 |
| (2, 1) | 3 |
| (2, 5) | 2 |

*FIG. 16*

*FIG. 17*

FIG. 18

FIG. 19

*FIG. 20*

*FIG. 21*

# FIG. 22

# FIG. 23

# FIG. 24

START ROTATION ANGLE
DETECTION PROCESS

EXTRACT THREE MOTION VECTORS ON
RANDOM BASIS — S81

CALCULATE TEMPORARY ROTATION
ANGLE USING EXTRACTED MOTION
VECTORS — S82

CALCULATE ERROR WHEN USING
TEMPORARY ROTATION ANGLE FOR
OTHER MOTION VECTORS — S83

COUNT NUMBER OF MOTION VECTORS
FOR WHICH ERROR IS WITHIN
PREDETERMINED THRESHOLD VALUE — S84

S85

NO — PREDETERMINED NUMBER OF
DATA HAS BEEN STORED?

YES

SELECT TEMPORARY ROTATION ANGLE
WITH LARGEST NUMBER OF MOTION
VECTORS FOR WHICH ERROR IS
WITHIN PREDETERMINED THRESHOLD
VALUE AS ANGLE OF CAMERA — S86

RETURN

## FIG. 25

```
           ( START CLUSTERING PROCESS )
                        │ ◄─────────────────────┐
                        ▼                        │
  S101 ──┐  ┌──────────────────────────┐        │
         └──│  SELECT ONE UNPROCESSED   │        │
            │       FEATURE POINT       │        │
            └──────────────────────────┘        │
                        │                        │
                        ▼                        │
  S102 ──┐  ┌──────────────────────────┐        │
         └──│ TRANSFORM MOVEMENT VECTOR AT│      │
            │ SELECTED FEATURE POINT BASED│      │
            │  ON ROTATION ANGLE OF CAMERA│      │
            └──────────────────────────┘        │
                        │                        │
                        ▼                        │
  S103 ──┐  ┌──────────────────────────┐        │
         └──│          DETECT          │        │
            │  TYPE OF MOVEMENT VECTOR  │        │
            └──────────────────────────┘        │
                        │                        │
  S104 ──┐              ▼                        │
         └──< ENTIRE FEATURE POINTS   >── NO ────┘
            < HAVE BEEN PROCESSED?    >
                        │
                       YES
                        ▼
  S105 ──┐  ┌──────────────────────────┐
         └──│    DETECT TYPE OF OBJECT  │
            └──────────────────────────┘
                        │
  S106 ──┐              ▼
         └──<      MOVING OBJECT?      >── NO ──┐
                        │                       │
                       YES                      │
                        ▼                       ▼
  S107 ──┐  ┌───────────────┐   ┌───────────────┐ ┌── S108
         └──│ DETECT TYPE OF│   │ DETECT TYPE OF│
            │ MOVING OBJECT │   │STATIONARY OBJECT│
            └───────────────┘   └───────────────┘
                        │               │
                        ▼◄──────────────┘
                   ( RETURN )
```

## FIG. 26

# FIG. 27

# FIG. 28

165

| 241 | 242 | 421 | 422 |
|---|---|---|---|
| ROTATION ANGLE CALCULATING PORTION | ERROR CALCULATING PORTION | SELECTING PORTION | ROTATION ANGLE ESTIMATING PORTION |

# FIG. 29

START ROTATION ANGLE
DETECTION PROCESS

EXTRACT THREE MOTION VECTORS ON
RANDOM BASIS — S201

CALCULATE TEMPORARY ROTATION
ANGLE USING EXTRACTED MOTION
VECTORS — S202

CALCULATE ERROR WHEN USING
TEMPORARY ROTATION ANGLE FOR
OTHER MOTION VECTORS — S203

COUNT NUMBER OF MOTION VECTORS
FOR WHICH ERROR IS WITHIN
PREDETERMINED THRESHOLD VALUE — S204

S205
NO / PREDETERMINED NUMBER OF
DATA HAS BEEN STORED?

YES

SELECT TEMPORARY ROTATION ANGLE
WITH LARGEST NUMBER OF MOTION
VECTORS FOR WHICH ERROR IS WITHIN
PREDETERMINED THRESHOLD VALUE — S206

ESTIMATE ROTATION ANGLE BASED ON
LEAST-SQUARES METHOD USING ONLY
MOTION VECTORS FOR WHICH ERROR IS
WITHIN PREDETERMINED THRESHOLD VALUE — S207

RETURN

# FIG. 30

165

441

442

```
HOUGH
TRANSFORM
PORTION
```

```
EXTRACTING
PORTION
```

# FIG. 31

START ROTATION ANGLE
DETECTION PROCESS

ESTABLISH PARAMETER SPACE HAVING
THREE ROTATION ANGLES AS PARAMETER — S221

VOTE ON PARAMETER SPACE WHILE
VARYING TWO OF THREE ROTATION
ANGLES FOR ENTIRE MOTION VECTORS — S222

EXTRACT COMBINATION
OF ROTATION ANGLES WITH MOST VOTES — S223

RETURN

FIG. 32

EP 1 959 675 A2

# FIG. 33

**REFERENCES CITED IN THE DESCRIPTION**

**Patent documents cited in the description**

- JP 6282655 A
- JP 2000251199 A
- JP 2006151125 A

**Non-patent literature cited in the description**

- **KENSUKE TAIRA ; MASAAKI SHIBATA.** Novel Method for Generating Optical Flow based on Fusing Visual Information and Camera Motion. *Journal of the Faculty of Science and Technology,* December 2006, vol. 43 (2), 87-93